# EUROPÄISCHE PATENTANMELDUNG

(11) **EP 0 558 812 A2**
(43) Veröffentlichungstag der Anmeldung: **08.09.1993**
(21) Anmeldenummer: 92120932.6
(22) Anmeldetag: 09.12.1992
(51) Int. Cl.: H04M 1/72

(54) **Infrarot-Telefon mit zugehörigem Handapparat und Basisgerät**

(30) Priorität: 11.12.1991 DE 4140823; 20.06.1992 DE 4220289; 10.07.1992 DE 4222694
(71) Anmelder: SenSys AG, CH-8434 Kaiserstuhl (CH)
(72) Erfinder: Reichert, Curt G., W-5169 Heimbach (DE); Fischer, Axel, W-4000 Düsseldorf 13 (DE)
(74) Vertreter: Döring, Wolfgang, Dr. Ing.

(57) **Zusammenfassung**

Es wird ein Infrarot-Telefon mit einer ersten Station und einer zweiten Station beschrieben. Bei der ersten Station handelt es sich insbesondere um einen Handapparat (1), während die zweite Station insbesondere eine fest installierte Gegenstation (2), beispielsweise Tisch/Wandstation (Basisgerät), ist. Die erste Station und die zweite Station besitzen bei einer Ausführungsform je einen einzigen Frequenzoszillator (7,15) dessen durch die zu übertragenden elektrischen Signale modulierte Frequenz sowohl die Leistung des zugehörigen IR-Emitters steuert als auch einer zugehörigen Mischstufe zugeführt wird. Das vom zugehörigen IR-Empfänger gelieferte Signal wird mit der modulierten Frequenz des zugehörigen Frequenzoszillators in der Mischstufe gemischt, und die durch die Mischung entstehende Summenfrequenz aus der empfangenen Frequenz und der modulierten Oszillatorfrequenz wird über einen Frequenzdemodulator demoduliert, wobei aus dem resultierenden Signal die Empfangsfunktion gewonnen wird. Bei einer weiteren Ausführungsform arbeitet jede Station mit zwei Frequenzoszillatoren. Desweiteren werden die Ausbildung des Handapparates und des Basisgerätes erläutert.

## Beschreibung

Die vorliegende Erfindung betrifft ein Infrarot-Telefon mit einer ersten Station, inbesondere einem Handapparat, mit Mikrofon, Lautsprecher, einem IR-Emitter, einem IR-Empfänger und einer zweiten Station, insbesondere fest installierten Gegenstation, mit IR-Emitter, IR-Empfänger, Fernsprechnetzanschluß.

Ein schnurloses Infrarot-Telefon ist aus "telcom report", 3. Jahrgang, Heft 1, Februar 1980, Seiten 24 bis 27 bekannt. Bei diesem Infrarot-Telefon erfolgt die Übertragung aller Signale zwischen einem Hörer (Handapparat) und einer fest installierten Gegenstation durch Infrarotlicht. Lumineszenzdioden senden für das menschliche Auge nicht wahrnehmbare Lichtblitze aus, die von den Wänden, von der Decke sowie vom Mobiliar des Raumes reflektiert werden und somit als diffuses Streulicht zu den Fotodioden im Empfänger gelangen. Hier werden die Lichtimpulse zurück in elektrische Signale umgesetzt. Zwischen Sender und Empfänger braucht also keine Sichtverbindung zu bestehen. Übertragung mit Hilfe kurzer, unsichtbarer Lichtblitze ergibt sich aus dem hier angewendeten Prinzip der Pulsphasenmodulation. Nach diesem Prinzip wird das niederfrequente Sprachsignal mit 9 kHz abgetastet. Die niederfrequente Information bestimmt die Phasenlage der Abtastimpulse zueinander. Der PPM-Demodulator im Empfänger gewinnt lediglich aus der Phasenlage, d.h. aus dem zeitlichen Abstand der Impulse von der Nominallage, das niederfrequente Nutzsignal wieder zurück. In die Lücke zwischen den Impulsen einer Übertragungsrichtung fügt man nach dem Prinzip der Zeitmultiplexübertragung die Impulse der Gegenrichtung ein. Das Übertragen erfolgt nach dem gleichen Prinzip wie vorher. Damit keine Rückkopplung entsteht, wird jeweils der eigene Empfänger gesperrt, wenn der Sender arbeitet und umgekehrt.

Soweit dem Anmelder bekannt, wurde jedoch das vorstehend beschriebene Prinzip niemals in der Praxis verwirklicht.

Der Erfindung liegt die Aufgabe zugrunde, ein Infrarot-Telefon der angegebenen Art zu schaffen, das bei besonders geringer Anfälligkeit gegenüber Störungen (Fremdlicht) für eine Mehrkanal- und Duplexübertragung geeignet ist. Insbesondere soll bei Sicherung einer guten Übertragung ein besonders geringer Aufwand an Bauelementen erreicht werden.

Diese Aufgabe wird nach einer ersten Lösung der Erfindung bei einem Infrarot-Telefon der eingangs beschriebenen Art dadurch gelöst, daß die erste Station und die zweite Station je einen einzigen Frequenzoszillator aufweisen, dessen durch die vom Mikrofon oder vom Fernsprechnetzanschluß kommenden, zu übertragenden elektrischen Signale modulierte Frequenz sowohl die Leistung des zugehörigen IR-Emitters steuert als auch einer zugehörigen IR-Mischstufe zugeführt wird,
die Frequenzoszillatoren der ersten und zweiten Station unterschiedliche Mittenfrequenzen besitzen,
das vom zugehörigen IR-Empfänger gelieferte Signal mit der modulierten Frequenz des zugehörigen Frequenzoszillators in der Mischstufe gemischt wird und
die durch die Mischung entstehende Summenfrequenz aus der empfangenen Frquenz und der modulierten Oszillatorfrequenz über einen Frequenzdemodulator demoduliert und aus dem resultierenden Signal die dem Lautsprecher oder dem Fernsprechnetz zuzuführende Empfangsfunktion gewonnen wird.

Erfindungsgemäß wird bei den zwei miteinander kommunizierenden Stationen (Handapparat und Gegenstation) jeweils das vom optischen Empfänger einer Station gelieferte elektrische Signal in einer Mischstufe der gleichen Station mit einer erzeugten Schwingung des Frequenzoszillators dieser Station (mit der Sendefunktion modulierten Frequenz des Oszillators) gemischt. Hierbei entsteht unter anderem eine Summenfrequenz aus der mit der Sendefunktion modulierten Oszillatorfrequenz und der mit der Empfangsfunktion modulierten Oszillatorfrequenz der anderen Station. Diese Summenfrequenz wird dann weiterverarbeitet, d.h. demoduliert. Aus dem demodulierten Signal wird die Empfangsfunktion ermittelt, da die Sendefunktion dieser Vorrichtung bekannnt ist. Die Sendefunktion kann insbesondere in einer Subtrahierstufe aus dem Signal des Frequenzdemodulators entfernt werden, so daß die Empfangs-Nachrichtenfunktion ungestört erhalten wird. Diese wird entweder dem Lautsprecher oder dem Fernsprechnetz zugeführt.

Die Frequenzoszillatoren beider Stationen besitzen unterschiedliche Mittenfrequenzen. Mit nur einem Frequenzoszillator pro Station kann somit sowohl die Pulsfolgefrequenz für den IR-Emitter erzeugt werden als auch die vom IR-Empfänger gelieferte Empfangsfrequenz auf die wohldefinierte und feste Zwischenfrequenz (Summenfrequenz) umgesetzt werden. Die vom IR-Emitter auf den IR-Empfänger derselben Station direkt übergekoppelte Strahlung führt nicht zu einer Beeinträchtigung, da das (schwache) empfangene elektrische Signal der Gegenstation ohnehin mit genau dieser Frequenz zur Summenfrequenz gemischt wird. Diese Summenfrequenz wird dann einer Frequenzdemodulation unterzogen, wodurch ein Signal entsteht, das aus der linearen Überlagerung der zu empfangenden mit der auszusendenden Nachrichtenfunktion besteht, da zur Bildung der Zwischenfrequenz (Summenfrequenz) das frequenzmodulierte Signal des Frequenzoszillators dieser Station verwendet wird.

In Weiterbildung der Erfindung sind die Mittenfrequenzen der Frequenzoszillatoren beider Stationen veränderlich, wobei gewisse wohldefinierte Frequenzen (Kanäle) wählbar sind. Die Frequenzoszillatoren beider Stationen weisen dabei zweckmäßigerweise eine Vielzahl von einander zugeordneten Mittenfrequenzpaaren auf, deren Frequenzsumme jeweils den gleichen konstanten wohldefinierten Wert besitzt. Das bedeutet, daß eine Station eines erfindungsgemäß ausgebildeten Telefons immer nur mit einer solchen anderen Station kommunizieren kann, deren Oszillatormittenfrequenz sich mit der Oszillatormittenfrequenz der zugehörigen Station genau zu diesem konstanten wohldefinierten Wert addieren läßt. Durch Wahl der entsprechenden Mittenfrequenzen der zugehörigen Stationen kann somit festgelegt werden, welche Station mit welcher anderen Station kommunizieren soll.

Im einzelnen ist es dabei vorteilhaft, vorzugsweise zwei Gruppen von Stationen zu definieren. So sollen sich die Stationen in vorzugsweise zwei Gruppen I und II einteilen lassen, und zwar genauso, daß stets eine Station der Gruppe I mit einer Station der Gruppe II kommuniziert. Kommunizieren bedeutet, daß elektrische Signale, die eine zu übertragende Information darstellen, zwischen beiden Stationen gleichzeitig in beiden Richtungen übertragen werden. Es lassen sich dann Frequenzzuordnungen zu frei bestimmbaren Kanalbezeichnungen wählen, und zwar genauso, daß eine Station der Gruppe I genau dann und nur dann mit einer Station der Gruppe II kommuniziert, wenn an beiden Stationen die gleiche Kanalbezeichnung eingestellt ist. Das bedeutet, daß für alle Stationen aus einer Gruppe die gleiche Zuordnung zwischen Mittenfrequenz des Frequenzoszillators und der Kanalbezeichnung gelten muß.

Erfindungsgemäß erfolgt die Zuordnung von Kanälen und Mittenfrequenzen jedoch nicht willkürlich, sondern vielmehr derart, daß die arithmetische Summe der Frequenzen aus Gruppe I und II, die jeweils zu einem Kanal gehören, stets eine konstante und kanalunabhängige Summe ergibt.

Die Summenfrequenz an der Mischstufe ist dann eine bekannte und wohldefinierte Frequenz, wenn an den kommunizierenden Stationen die gleiche Kanalwahl erfolgt.

Jede der Stationen kann somit gleichzeitig während der Ausstrahlung von Informationen die Aussendungen einer anderen gleichartigen Station empfangen und auswerten. Werden mehrere Stationen in IR-Reichweite nebeneinander betrieben, so kann über die Wahl der Mittenfrequenz eine bestimmte der mehreren Stationen gezielt angesprochen werden. Dies setzt natürlich voraus, daß die anzusprechende Station bezüglich Ihres Empfangteils, besonders hinsichtlich der elektrischen Filterung, für diese gewählte Mittenfrequenz empfindlich ist.

Die Mittenfrequenz der Frequenzoszillatoren wird vorzugsweise durch einen PLL (Phase-Locked-Loop)-Regelkreis stabilisiert. Ein solcher Regelkreis erlaubt das sehr präzise Einhalten einer vorgegebenen Mittenfreqenz, während kurzfristige Änderungen der Mittenfrequenz, wie für die Frequenzmodulation notwendig, möglich sind. Die Verwendung einer Phase-Locked-Loop-Regelung erlaubt außerdem in einfacher Weise, die Mittenfrequenz in einem gewissen Frequenzraster einzustellen (Kanalwahl).

Bei der vorstehend beschriebenen erfindungsgemäßen Lösung wird somit auf der Empfangsseite nicht im Basisband, sondern im ZF-Band (vorstehend auch als Summenfrequenz bezeichnet) gearbeitet. Gegenüber dem Basisband ergibt sich hierdurch der Vorteil einer geringeren Anfälligkeit gegenüber Störungen (Fremdlicht). Darüber hinaus läßt sich in einfacher Weise eine Mehrkanalübertragung sowie eine vollständige Duplexübertragung (gleichzeitig in beiden Richtungen) erreichen, was bei einem Arbeiten im Basisband nur über besonders aufwendige Verfahren (beispielsweise Zeitschlitzverfahren) möglich wäre.

Die vorstehend genannte Aufgabe wird nach einer zweiten Lösung der Erfindung bei einem Infrarot-Telefon der eingangs beschriebenen Art dadurch gelöst, daß die erste und zweite Station jeweils einen ersten Frequenzoszillaotr aufweisen, dessen durch die zu übertragenden elektrischen Signale modulierte Frequenz die Leistung des zugehörigen IR-Emitters steuert, und einen zweiten Frequenzoszillator mit Mischer zur Umsetzung der über den IR-Empfänger empfangenen elektrischen Signale ins Zwischenfrequenzband.

Auch bei dieser Lösung wird somit auf der Empfangsseite im Zwischenfrequenzband gearbeitet, wodurch ebenfalls die vorstehend aufgeführten Vorteile erreicht werden. Bei dieser Lösung ist für jede Station ein zweiter Oszillator auf der Empfängerseite erforderlich, wodurch der Aufwand größer wird als bei der vorstehend beschriebenen ersten Lösung der Erfindung. Es enfällt hierbei jedoch eine zusätzliche Schleife zwischen Senderseite und Empfängerseite der gleichen Station. Die zweite Lösung der Erfindung ist insbesondere geeignet für Anwendungsfälle, bei denen im Telefonanschlußnetz der Post nur eine Zweidrahtleitung zur Verfügung steht, während bei Vierdrahtleitungen beide Lösungen zu guten Ergebnissen führen.

Bei der zuletzt beschriebenen zweiten Lösung der Erfindung wird eine Beeinflussung der Empfängerseite einer Station durch die eigene Senderseite vorzugsweise dadurch vermieden, daß die Frequenzen des Sendeoszillators und des Empfängeroszillators derselben Station so abgestimmt sind, daß bei Vorliegen einer Empfangsfunktion die Frequenz des Sendeoszillators im Mischer des Empfängers genau zur Zwischenfrequenz gemischt wird. Wenn keine Empfangsfunktion vorliegt, wird somit keine ZF-Frequenz erhalten. Hiermit wird vermieden, daß durch den eigenen Sendeoszillator entsprechende störende Mischfrequenzen entstehen.

Wie bei der vorstehend beschriebenen Ausführungsform sind die Trägerfrequenzen der Frequenzoszillatoren durch einen PLL(Phase-Locked-Loop)-Regelkreis stabilisiert. Hierdurch werden die vorstehend bereits aufgeführten Vorteile erreicht.

Vorzugsweise finden Lumineszenzdioden als IR-Emitter mit einer Wellenlänge von 750 nm bis 1.000 nm Verwendung, da aufgrund der Bauelementetechnologie bei diesen Dioden ein besonders großer Wirkungsgrad möglich ist und folglich ein großer Strahlungsfluß erzielt wird. Eine große optische Leistung wirkt sich günstig bezüglich der möglichen Reichweite der Übertragung aus. Die Wellenlänge hat auf die Funktionsweise keinen Einfluß; sie kann mithin frei gewählt werden.

Hinsichtlich einer großen Übertragungsreichweite ist es ferner vorteilhaft, den Stromverlauf durch die IR-Emitter sinus-halbwellenförmig zu steuern. Das bedeutet, daß die vom Frequenzoszillator erzeugte frequenzmodulierte und sinusförmige Schwingung direkt den Stromverlauf durch die Lumineszenzdioden steuert, und zwar so, daß während der positiven Sinushalbwelle der Strom durch die Dioden proportional zum Augenblickswert der positiven Sinushalbwelle des Frequenzoszillators ist. Während der negativen Sinushalbwelle der Schwingung des Frequenzoszillators soll kein Strom durch die Lumineszenzdioden fließen.

Durch diese Form der Diodenstromsteuerung ist der Grundwellenanteil der frequenzmodulierten Schwingung im Spektrum der abgestrahlten Leistung maximal hinsichtlich des Signalwirkungsgrades der Dioden.

Es kann vorteilhaft sein, mehrere IR-Empfänger in einer Station einzusetzen, da hierdurch eine Reichweitenvergrößerung erzielt wird. Als IR-Empfänger sind Foto-Sperrschichtempfänger (Fotodioden) besonders geeignet. Es versteht sich, daß die IR-Empfänger für die von den IR-Emittern abgegebene Strahlung empfindlich sind.

Fotodioden mit großen fotoempfindlichen Flächen sind günstig, da von ihnen naturgemäß mehr IR-Strahlung aufgefangen wird. Eine Steigerung der fotoempfindlichen Fläche im Sinne einer großen Übertragungsreichweite ist durch die Verwendung mehrerer paralleler Fotodioden möglich.

Bei einer besonders bevorzugten Ausführungsform der Erfindung handelt es sich bei der ersten Station um einen Handapparat (Telefonhörer) und bei der zweiten Station um eine fest installierte Tisch/Wandstation. Der Handapparat besitzt dabei ein Mikrofon, einen Lautsprecher (Hörmuschel), eine aufladbare Batterie als Stromquelle, einen IR-Emitter und einen IR-Empfänger sowie die zugehörige Schaltungselektronik, die nachfolgend im einzelen erläutert wird. Die feste Gegenstation weist ebenfalls einen IR-Emitter, IR-Empfänger sowie eine im wesentlichen entsprechende Schaltungselektronik auf. Ihr ist ferner eine Batterieladestation zugeordnet. Im übrigen weist die Gegenstation einen herkömmlichen Aufbau gemäß den bekannten Telefonen auf. Die Gegenstation ist entweder immer eingeschaltet oder wird durch Kontakt mit dem Handapparat ein- und ausgeschaltet (Gabelumschalter). Wenn sich der Handapparat auf der stationären Gegenstation befindet, wird dessen Batterie aufgeladen. Über den entsprechenden Ladestrom oder über einen extra Schalter kann der Strom ausgeschaltet werden, um Strom zu sparen.

Hierbei ist vorausgesetzt, daß die Gegenstation und ein herkömmlicher Fernsprechapparat nicht voneinander getrennt sind. Bei Trennung sind die Ladestationen und die üblichen Telefoneinrichtungen dem herkömmlichen Apparat zugeordnet.

Es versteht sich, daß die Stationen ferner mit Bau- bzw. Schaltungsteilen versehen sind, um die üblichen Telefonfunktionen wahrzunehmen, beispielsweise mit Wählscheiben, Wähltasten etc.. Neben den Sprachsignalen müssen daher auch zusätzliche Steuersignale und Wählsignale vom Infrarot-Telefon übertragen werden. Auch derartige Signale können, ebenso wie die Sprachsignale, uneingeschränkt übertragen werden.

Bei einer besonders bevorzugten Ausführungsform weist das erfindungsgemäß ausgebildete Infrarot-Telefon zur Verbesserung des Signal-Rausch-Abstandes einen Compander (Compressor/Expander) auf. Dem Mikrofon sind zweckmäßigerweise ein Mikrofonverstärker mit Begrenzer, ein Bandpaß und ein Compressor nachgeschaltet. Die Modulationsspannung am Ausgang des Compressors wird vorzugsweise um 60 µs verzögert. Dem Frequenzdemodulator ist ein Expander und ein Bandpaß nachgeschaltet.

Um Strom zu sparen, weist das erfindungsgemäße IR-Telefon vorzugsweise eine den IR-Emitter in den Sprechpausen abschaltende Gleichrichter-Sprachsteuerungsstufe auf. Bei einer weiteren Alternative besitzt das IR-Telefon eine Pulsbreitensteuerungsstufe zur Änderung der Emitterausgangsleistung, wodurch ebenfalls Strom gespart werden kann.

In bezug auf die Pulsbreitensteuerungsstufe sieht die Erfindung vorzugsweise zwei Varianten vor. Bei einer ersten Variante vergleicht die Pulsbreitensteuerungstufe das Signal-Rausch-Verhältnis auf der Empfängerseite der ersten Station mit einem Schwellenwert, gibt bei Über/Unterschreiten des Schwellenwertes ein Zusatzsignal ab, überträgt das Zusatzsignal über den IR-Emitter und den IR-Empfänger auf die zweite Station, detektiert dort das Zusatzsignal und variiert die Pulsbreite der zugehörigen Sendeendstufe bei Vorhandensein/Nichtvorhandensein des Zusatzsignals. Bei Variation der Pulsbreite in Richtung auf schmälere Impulse kann die Sendeleistung beispielsweise bis zu einem Wert von 30 % reduziert werden. Diese Variante der Erfindung ermöglicht somit eine Sendeleistungsregelung in Abhängigkeit von der Entfernung.

Bei einer zweiten erfindungsgemäßen Variante der Pulsbreitenregelung bzw. Pulsbreitensteuerung mißt die Pulsbreitensteuerungsstufe den Mittelwert des Diodenstromes, vergleicht diesen Mittelwert mit einem voreingestellten Mittelwert und führt den gemessenen Wert bei Abweichen durch Variation des Puls/Pausenverhältnisses auf den voreingestellten Mittelwert. Hierdurch läßt sich der Stromverbrauch reduzieren und ein zusätzlicher Diodenschutz sowie Endstufenschutz erreichen.

Naturgemäß sind auch Kombinationen beider Pulsbreitenregelungssysteme möglich.

Es wurde bereits vorstehend darauf hingewiesen, daß mit dem erfindungsgemäß ausgebildeten Infrarot-Telefon nicht nur Tonsignale, sondern auch Steuer/Wählsignale, d. h. beliebige Sonderfunktionen, über die Infrarotstrecke übertragbar sind. Die Steuer/Wählsignale (Sonderfunktionen) können dabei beispielsweise von einer Tastatur und/oder einem Schalter der ersten oder zweiten Station stammen. Die entsprechenden Signale werden verarbeitet und zum Senden dem zugehörigen Sendeoszillator zugeführt. Auf der Empfangsseite werden sie nach Demodulation durch entsprechende Verarbeitung wiedergewonnen. Zur Verarbeitung kommt vorzugsweise ein Prozessor mit FSK-Modem als eine Variante zum Einsatz. Bei einer anderen Variante wird beispielsweise in Abhängigkeit von der Reihe/Spalte einer Tastatur-Matrix über ein DTMF-Generator eine spezielle Tonkombination erzeugt, mit der der entsprechende Sendeoszillator beaufschlagt wird. Nach Demodulation erfolgt die Rückwandlung über einen DTMF-Receiver.

Ein Anwendungsfall für die Übertragung von derartigen Sonderfunktionen ist ein Fall, bei dem allein der Handapparat mit einer Wähltastatur versehen ist. Dieser Wähltastatur können auch weitere Steuerungsfunktionen zugeordnet sein, beispielsweise die Lautstärkeeinstellung des Lautsprechers am Handapparat oder Basisgerät.

Die vorliegende Erfindung betrifft ferner einen Handapparat für ein aus Basisgerät und Handapparat bestehendes Telephon, insbesondere der vorstehend beschriebenen Art, mit einem länglichen Gehäuse mit einem Sprechbereich an einem Endbereich und einem Hörbereich am gegenüberliegenden Endbereich der Gehäuseunterseite, einem dem Sprechbereich zugeordneten Mikrophon, einem dem Hörbereich zugeordneten Lautsprecher, einem Sendeteil, einem Empfangsteil und einer elektronischen Signalverarbeitungseinheit innerhalb des Gehäuses sowie wahlweise einer Tastatur an einer Bedienfläche des Gehäuses.

Bei einem herkömmlich ausgebildeten Telephon ist der Handapparat mit dem Basisgerät über eine Telephonschnur verbunden. Bei Funktelephonen besteht keine Schnurverbindung zwischen Handapparat und Basisgerät. Ein hierfür geeigneter Handapparat besitzt etwa den vorstehend beschriebenen Aufbau.

Der Erfindung bezweckt, einen Handapparat für ein mit Infrarotübertragung zwischen Basisgerät und Handapparat arbeitendes Telephon zu schaffen, der unter Sicherstellung einer besonders guten Übertragungsqualität zwischen Handapparat und Basisgerät besonders bequem und einfach gehandhabt werden kann.

Diese Aufgabe wird erfindungsgemäß bei einem Handapparat der vorstehend angegebenen Art dadurch gelöst, daß der dem Sprechbereich zugeordnete Gehäuseoberteilbereich unter Bildung eines Infrarotfensters aus durchsichtigem bzw. durchscheinendem Material ausgebildet ist und ein eine Vielzahl von Infrarotsende- und -empfangsdioden aufweisendes Infrarotsende- und -empfangsteil beherbergt, wobei die Oberseite, Vorderseite und Seitenflächen des Gehäuseoberteilbereiches jeweils Infrarotempfangs- und/oder -sendeflächen vorsehen.

Der vorliegenden Erfindung liegt der Gedanke zugrunde, im unteren, d. h. dem dem Sprechbereich zugehörigen, Gehäuseteil das Infrarotsende/Empfangsteil unterzubringen und diesen Gehäusebereich als entsprechendes Infrarotfenster auszubilden. Hierbei verbleibt der Sprechbereich an der Unterseite des Handapparates, wobei dieser Gehäusebereich aus einem üblichen undurchsichtigen Material hergestellt ist, in dem entsprechende Mikrophonöffnungen vorgesehen sind. Der zugehörige Gehäuseoberteilbereich, d. h. die Oberseite, Vorderseite und die beiden Seitenflächen, besteht jedoch aus einem gegenüber IR-Strahlung durchlässigen Material, d. h. durchsichtigem oder durchscheinendem Material. In diesem Bereich sind IR-Sende- und Empfangsteil untergebracht. Diese Teile besitzen eine Vielzahl von Infrarotsende- und- empfangsdioden, wobei die Dioden so ausgerichtet sind, daß vorzugsweise jeder der vier Seiten des Gehäuseoberteilbereiches entsprechende Sende- und Emfpangsdioden zugeordnet sind. Bei einer speziellen Ausführungsform sind an der Oberseite nur Empfangsdioden und an der Vorderseite nur Sendedioden angeordnet, während die beiden Seitenflächen jeweils Sende- und Empfangsdioden aufweisen.

Vorzugsweise ist auch die elektronische Signalverarbeitungseinheit in dem das Sende/Empfangsteil aufnehmenden Gehäuseoberteilbereich untergebracht. Wie erwähnt, befindet sich auf der Unterseite dieses Bereiches das Mikrophon des Handapparates mit zugehörigem Sprechbereich. Die gesamte Einheit kann als Steckmodul ausgebildet werden, der durch Stecken mit dem übrigen Gehäuse des Handapparates verbunden ist.

Der das Infrarotfenster bildende Gehäuseoberteilbereich ist zweckmäßigerweise im Horizontalschnitt etwa rechteckförmig ausgebildet. Dieser Bereich geht an den beiden Seitenflächen und an der Unterseite vorzugsweise kontinuierlich in den übrigen Gehäusebereich über, so daß sich insgesamt ein kompaktes flaches, im Querschnitt etwa rechteckförmiges Gehäuse ergibt. Vorzugsweise ist zwischen dem das Infrarotfenster bildenden Gehäuseoberteilbereich und dem restlichen Oberteilbereich eine sich vom Infrarotfenster nach oben erstreckende Stufe vorgesehen. Diese Stufe hat die Aufgabe, das Infrarotfenster vom übrigen Gehäusebereich abzusetzen und zu verhindern, daß der Benutzer des Handapparates während des Telephonierens das Infrarotfenster mit seiner Hand abdeckt. Die Stufe soll daher verhindern, daß der Benutzer den Handapparat an dem das Infrarotfenster bildenden Gehäusebereich anfaßt.

Durch Anordnung des Infrarotfensters am unteren, dem Sprechbereich benachbarten Bereich des Handapparates wird darüber hinaus verhindert, daß das Infrarotfenster durch die Haare des Benutzers abgedeckt wird, was insbesondere für weibliche Benutzer von Bedeutung ist.

Abgesehen von der vorstehend erwähnten Stufe ist das Infrarotfenster voll in das Gehäuse integriert, d. h. die Seitenflächen des Infrarotfensters gehen kontinuierlich in die Seitenflächen des übrigen Gehäuses über. Das Infrarotfenster besitzt daher zweckmäßigerweise die gleiche Breite wie das übrige Gehäuse, weist jedoch aufgrund der Stufe eine geringere Höhe als dieses auf.

In Weiterbildung der Erfindung ist die Tastatur, d. h. Wähltasten und Sondertasten, auf der Oberseite des Gehäuseoberteiles angeordnet. Diese Anordnung hat den Vorteil, daß man die Tastatur bei Ablage des Handapparates auf einem Tisch etc. von oben bedienen kann. In diesem Zusammenhang ist zu bemerken, daß der am oberen Ende der Unterseite befindliche Hörbereich zweckmäßigerweise so ausgestaltet ist, daß der Handapparat sicher auf einer ebenen Fläche abgelegt werden kann, ohne dabei zu kippen oder zu verrutschen. Dies wird vorzugsweise damit erreicht, daß der Hörbereich zumindest teilweise eben ausgebildet ist, so daß sich in Zusammenwirkung mit der Endkante am Sprechbereich eine Ablagefläche ergibt. Da das Gehäuse vorzugsweise eine in Längsrichtung konvex gekrümmte Form besitzt, bildet der Hörbereich vorzugsweise einen hiervon flächig vorstehenden Abschnitt, um die entsprechende Ablagefläche vorzusehen.

Die auf der Oberseite des Gehäuseoberteiles angeordnete Tastatur befindet sich vorzugsweise in Längsrichtung des Handapparates etwa im mittleren Bereich desselben, wobei die Tastatur bei Anordnung der Stufe zum Infrarotfenster benachbart zur Stufe angeordnet ist. Diese Lage erscheint für die Bedienung der Tastatur am günstigsten.

Bei einer speziellen Ausführungsform der Erfindung besitzt der Handapparat ein zweites Mikrophon, das einem zweiten Sprechbereich (Freisprechbereich) auf der Oberseite des Gehäuseoberteiles benachbart zum Infrarotfenster zugeordnet ist. Dieser zweite Sprechbereich ermöglicht ein Freisprechen bei abgelegtem Handapparat. Dabei muß der Handapparat nicht in irgendeiner Weise manuell gehaltert werden. Der zweite Sprechbereich ist vom Benutzer, insbesondere in sitzender Stellung, gut erreichbar.

Zum Einschalten der Freisprecheinrichtung weist der Handapparat in Weiterbildung der Erfindung im Bereich der dem ersten Sprechbereich benachbarten Endkante einen Kontaktschalter auf. Wird der Handapparat abgelegt, so wird der Kontaktschalter betätigt und schaltet die Freisprecheinrichtung ein. Mit anderen Worten, bei dieser Ausführungsform wird durch das Ablegen des Handapparates immer auf Freisprechen umgeschaltet. Der Benutzer kann somit bei Ablage des Handapparates anderen Arbeiten, beispielsweise Schreibtischarbeiten, nachgehen und gleichzeitig telephonieren, ohne den Handapparat manuell haltern zu müssen. Hierdurch wird die Bedienung des Handapparates wesentlich erleichtert.

Bei der vorstehend beschriebenen Ausführungsform ist die Unterseite des Handapparates, abgesehen von dem Höreransatz, im wesentlichen glatt ausgebildet. Hierbei ist das Mikrophon des Sprechbereiches im Gehäuse untergebracht, wobei das Gehäuse an dieser Stelle vorzugsweise eine oder mehrere Sprechöffnungen aufweist. Bei einer anderen Ausführungsform der Erfindung ist das dem Sprechbereich zugeordnete Mikrophon in einem von der Gehäuseunterseite vorstehenden nasenförmigen Gehäuseabschnitt angeordnet, wobei dieser nasenförmige Gehäuseabschnitt vorzugsweise im Längsschnitt etwa dreieckförmig ausgebildet ist und wobei eine kürzere und stärker geneigte, mit mindestens einer Sprechöffnung versehene Seite zum Infrarotfenster hin weist. Bei dieser Ausführungsform befindet sich daher die mindestens eine Sprechöffnung an einem relativ steil von der Unterseite des Handapparates vorstehenden Ansatz, so daß besonders günstige Schallaufnahmeeigenschaften erreicht werden. Der nasenförmige Gehäuseabschnitt ist in Querrichtung gesehen etwa mittig an der Unterseite des Handapparates angeordnet, und zwar in Längsrichtung des Handapparates gesehen vorzugsweise unmittelbar benachbart zum Infrarotfenster, wobei der nasenförmige Abschnitt vorzugsweise auf das Infrarotfenster hinaufragt. Die mindestens eine Sprechöffnung ist zweckmäßigerweise in einer nutartigen Vertiefung angeordnet, die sich etwa mittig in der kürzeren und stärker geneigten Seite in Längsrichtung zur selben erstreckt. Hierdurch werden die Schallaufnahmeeigenschaften weiter verbessert.

Eine alternative Ausführungsform in bezug auf den Höreransatz sieht vor, daß dieser als von der Unterseite des Handapparates vorstehende viereckige Hörmuschel ausgebildet ist, deren Seitenflächen sich etwa senkrecht zur Unterseite des Handapparates erstrecken. Bei dieser Ausführungsform besitzt der Höreransatz keine zur Unterseite des Handapparates geneigte Ablagefläche.

Je nach Ausgestaltung des Handapparates ergeben sich für diesen drei Hauptausführungsformen. Bei der ersten Ausführungsform weist der Handapparat keine Tastatur auf, d. h. es handelt sich hierbei um einen drahtlosen Hörer. Die Tastatur (Wähl- und Funktionstasten) ist allein am Basisgerät vorgesehen. Diese Ausführungsform kann insofern variiert sein, daß der Handapparat eine einzige Taste zum Ein/Ausschalten und ggf. eine Taste zur Wahlwiederholung besitzt.

Bei einer zweiten komfortableren Ausführungsform besitzen sowohl der Handapparat als auch das Basisgerät jeweils eine eigene Tastatur, wobei das Basisgerät ggf. zusätzlich mit einem Display versehen ist. Der Handapparat ist ferner mit entsprechenden Freisprecheinrichtungen versehen, wie vorstehend erläutert.

Bei einer dritten Ausführungsform ist der Handapparat als vollständig mobiles Gerät ausgebildet und weist eine entsprechende Tastatur auf. Das Basisgerät besitzt hierbei nur den Infrarotteil, die Ladeeinrichtung für den Handapparat und funktioniert als Anschlußstelle für das Postnetz. Es ist ggf. noch mit einer Anrufsignalisierung versehen.

Die vorliegende Erfindung betrifft desweiteren ein Basisgerät (Gegenstation) für ein Infrarot-Telephon, insbesondere der vorstehend beschriebenen Art, und einen Handapparat für ein Infrarot-Telephon, ebenfalls insbesondere nach der vorstehend beschriebenen Art. Dieses Basisgerät ist erfindungsgemäß dadurch gekennzeichnet, daß es auf der Oberseite seines Gehäuses im Bereich der Auflagefläche für den Handapparat ein Infrarotfenster aus durchsichtigem bzw. durchscheinendem Material aufweist, unter dem ein Infrarotsende- und -empfangsteil angeordnet ist. Diese Lage des Infrarotfensters hat den Vorteil, daß diese Stelle infolge des aufgelegten Handapparates nicht durch irgendwelche Gegenstände, wie Papier etc., abgedeckt werden kann, so daß hierdurch die Infrarotübertragung nicht in Mitleidenschaft gezogen werden kann. Eine Anordnung des Fensters im übrigen Bereich des Gehäuses hätte den Nachteil, daß hier die Gefahr eines Abdeckens besonders groß wäre.

Darüber hinaus weist die Auflagefläche des Basisgerätes für den Handapparat vorzugsweise jeweils eine Vertiefung für den Höreransatz und den nasenförmigen Gehäuseabschnitt des Handapparates auf. Hierdurch wird eine fixierte Lage des Handapparates auf dem Basisgerät sichergestellt. Die Vertiefung für den Höreransatz ist zweckmäßigerweise durch eine seitlich vom Gehäuse vorstehende, mittig offene Fassung gebildet. Bei dieser Ausführungsform ragt daher der Handapparat im auf das Basisgerät aufgelegten Zustand über das eigentliche Gehäuse desselben hinaus, wobei der Höreransatz in der erwähnten mittig offenen Fassung zu liegen kommt.

In weiterer Ausgestaltung der Erfindung weist die Auflagefläche des Basisgerätes für den Handapparat drei Kontakte auf, von denen zwei als Ladekontakte und einer als Erkennungskontakt für den aufgelegten Zustand des Handapparates unabhängig vom Ladestrom ausgebildet sind. Die beiden Ladekontakte bewirken hierbei im aufgelegten Zustand des Handapparates ein Aufladen von dessen Sekundärbatterien. Wird der Handapparat abgehoben, wird der Ladevorgang gestoppt und der Handapparat eingeschaltet. Beim Auflegen des Handapparates wird dieser ausgeschaltet und mit dem Aufladen begonnen. Der dritte Kontakt bildet einen Erkennungskontakt für den aufgelegten Zustand des Handapparates. Würde nämlich der Handapparat allein durch eine Unterbrechung des Ladestromes über die Ladekontakte ausgeschaltet, so könnte der Fall eintreten, daß bei einer Unterbrechung der Stromzufuhr zum Basisgerät und einer hieraus resultierenden Unterbrechung des Ladestromes simuliert wird, der Handapparat sei abgehoben, so daß er hierdurch in Betrieb genommen würde. Der dritte Kontakt verhindert dies und stellt sicher, daß der Handapparat selbst bei einer Unterbrechung des Ladestromes im aufgelegten Zustand nicht in Betrieb genommen wird.

Wahlweise kann in der Vertiefung für den nasenförmigen Gehäuseabschnitt (Mikrophon) des Handapparates ein mechanischer Gabelkontakt angeordnet sein, der wie ein derartiger Kontakt bei einem herkömmlichen Telephon die Leitung zum Postnetz freigibt bzw. trennt. Wenn einer gesonderter Ausschaltknopf am Handapparat vorgesehen ist, muß im Basisgerät ein spezieller Schalter (Relais) vorgesehen sein, um bei ausgeschaltetem Handapparat die Postleitung zu trennen.

Die Erfindung wird nachfolgend anhand von Ausführungsbeispielen in Verbindung mit der Zeichnung im einzelnen erläutert. Es zeigen:
- Figur 1: den schematischen Aufbau eines erfindungsgemäß ausgebildeten Infrarot-Telefons;

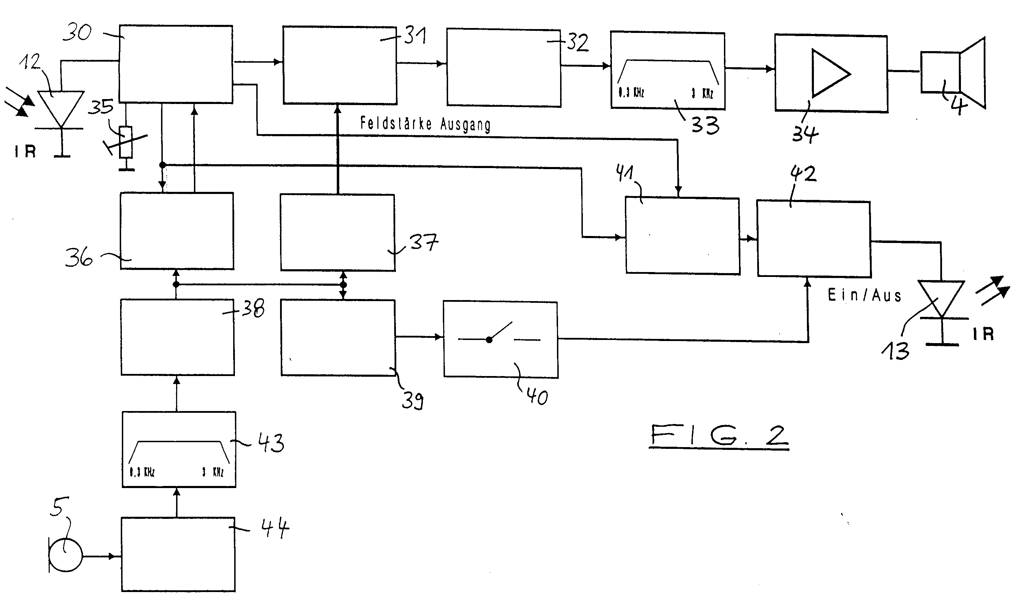

- Figur 2: ein Blockschaltbild des Handapparates des IR-Telefons der Figur 1 gemäß einer ersten Variante der Erfindung;
- Figur 3: ein Grobschaltbild des Handapparates des IR-Telefons der Figur 1 gemäß einer zweiten Variante der vorliegenden Erfindung;
- Figur 4: ein Grobschaltbild des zugehörigen Basisgerätes gemäß der zweiten Variante der Erfindung;
- Figur 5: ein detailliertes Blockschaltbild des Handapparates des IR-Telefons gemäß der zweiten Variante der Erfindung;
- Figur 6: ein Blockschaltbild zur Darstellung der Pulsbreitensteuerung in Abhängigkeit vom Signal-Rausch-Verhältnis;
- Figur 7: eine Darstellung zur Variation des Puls/Pausenverhältnisses in Abhängigkeit vom Mittelwert des Diodenstromes;
- Figur 8: eine räumliche Darstellung einer Ausführungsform eines Handapparates;
- Figur 9: den Handapparat der Figur 8 mit abgenommener Abdeckung des Infrarotfensters;
- Figur 10: eine Seitenansicht einer geänderten Ausführungsform eines Handapparates;
- Figur 11: eine Draufsicht auf den Handapparat der Figur 10 bei abgenommenem Deckel;
- Figur 12: die Mikrofonnase der Ausführungsform der Figuren 10 und 11 in der Draufsicht und Seitenansicht;
- Figur 13: eine Draufsicht auf eine Ausführungsform eines Basisgerätes; und
- Figur 14: eine Seitenansicht des Basisgerätes der Figur 13.

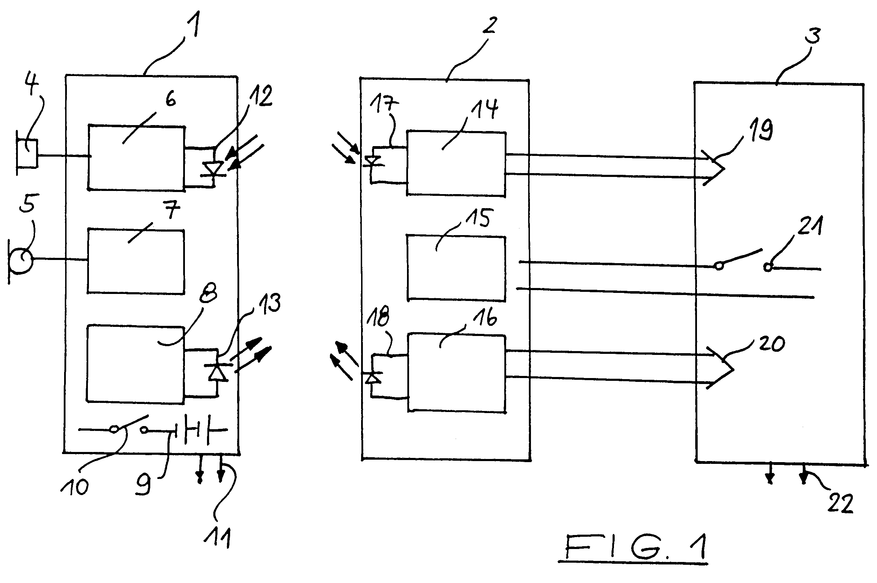

Figur 1 zeigt den schematischen Aufbau eines Infrarot-Telefons. Bei der hier gezeigten speziellen Ausführungsform besitzt das Telefon einen schnurlosen Handapparat 1, der dem Benutzer eine entsprechende Mobilität bietet. Der Benutzer kann sich damit in einem Raum frei bewegen. Die entsprechenden Vorteile einer Infrarot-Übertragung gegenüber einem Funktelefon, wie beispielsweise bessere Abhörsicherheit, geringe gegenseitige Beeinflussung, keine Genehmigungspflicht durch die Fernmeldeverwaltung, sind bekannt.

Dieser Handapparat 1 ist bei diesem Ausführungsbeispiel wie ein üblicher Telefonhörer aufgebaut und besitzt eine Hörmuschel mit einem Lautsprecher 4 sowie einen Sprechbereich mit einem Mikrofon 5. Auf die im Inneren des Handapparates untergebrachte Schaltungselektronik wird später im einzelnen eingegangen. Als Bausteine sind hier nur dargestellt ein FM-Empfänger 6 mit Misch- und Demodulationsstufe sowie NF-Verstärker und Expander, der mit einem Infrarot-Empfänger 12 in der Form von mindestens einer Fotodiode und dem Lautsprecher 4 gekoppelt ist, ein Modulator (PLL-stabilisierter Oszillator) 7 mit Compressor und Sprachsteuerungsstufe, der mit dem Mikrofon 5 gekoppelt ist, und ein IR-Emitter 8 mit einer Senderendstufe und mindestens einer Lumineszenzdiode 13. Der Handapparat 1 weist ferner einen AUS/EIN-Schalter 10, eine Batterie 9 sowie entsprechende Batterie-Ladekontakte 11 auf.

Das in Figur 1 dargestellte IR-Telefon umfaßt ferner eine fest installierte Gegenstation 2 in der Form einer Tisch- oder Wandstation. Abgesehen vom Mikrofon 5 und vom Lautsprecher 4 besitzt die Gegenstation 2 einen entsprechenden Aufbau wie der Handapparat und umfaßt ebenfalls drei elektronische Hauptbauteile, nämlich einen FM-Empfänger 14 mit Mischstufe, Demodulationsstufe, Expander und NF-Verstärker, einen Modulator (Oszillator) 15 mit Compressor und Sprachsteuerungsstufe und einen IR-Emittter 16 mit Senderendstufe und mindestens einer Lumineszenzdiode 18. Der FM-Empfänger ist mit mindestens einer Fotodiode 17 gekoppelt.

Das Telefon umfaßt ferner einen herkömmlichen Fernsprechapparat 3, der an das Fernsprechnetz angeschlossen ist. Der Ausgang des Bausteines 14 der Gegenstation ist, wie bei 19 gezeigt, mit dem Mikrofon des herkömmlichen Fernsprechapparates gekoppelt, während der Ausgang des Bausteines 16 mit dem Hörer desselben gekoppelt ist, wie bei 20 gezeigt. Desweiteren befindet sich zwischen der Gegenstation 2 und dem herkömmlichen Apparat 3 ein Gabelumschalter 21. Schließlich sind am Apparat 3 Batterie-Ladekontakte 22 vorgesehen.

In das Mikrofon 5 des Handapparates 1 eingegebene Sprechsignale werden daher über die Bausteine 7 und 8 und die mindestens eine Lumineszenzdiode 13 als IR-Strahlung abgegeben und von der mindestens einen Fotodiode 17 der stationären Gegenstation 2 aufgefangen. Nach entsprechender Verarbeitung in der Stufe 14 werden sie als elektrische Signale an den herkömmlichen Fernsprechapparat weitergegeben. Von diesem ankommende elektrische Signale werden über den IR-Emitter der Gegenstation 2 und die zugehörige mindestens eine Lumineszenzdiode 18 als IR-Signale der mindestens einen Fotodiode 12 des Handapparates 1 zugeführt. Nach entsprechender Verarbeitung in der Stufe 6 werden sie in der Form von elektrischen Signalen an den Lautsprecher 4 weitergegeben.

Das Blockschaltbild der Figur 1 zeigt den schematischen Aufbau der elektronischen Schaltung des Handapparates 1. Sprechsignale werden über das Mikrofon 5 in elektrische Signale umgewandelt, die einem Mikrofonverstärker und Begrenzer 44 zugeführt werden. Der Mikrofonverstärker hebt die geringen Mikrofonsignalspannungen auf den zur Weiterverarbeitung notwendigen Pegel. Der Begrenzer verhindert eine Übersteuerung der nachfolgenden Stufen. In einem nachfolgenden Bandpaß 43 wird der Frequenzbereich auf den für eine Sprachübertragung und im Interesse eines minimalen Bandbreitenbedarfs notwendigen Bereich beschnitten.

Die Signale werden dann einem Compressor 38 eines Compandersystems (Compressor/Expander) zugeführt. Im Compressor wird der Originaldynamikumfang auf die Hälfte komprimiert. Mit dem vom Compressor 38 abgegebenen Signal wird ein Frequenzoszillator 4 frequenzmoduliert. Dieser Oszillator ist durch einen Phase-Locked-Loop-Regelkreis in bekannter Art in bezug auf seine Mittenfrequenz stabilisiert. Der typische Frequenzbereich reicht bis ca. 20 MHz. Ein Frequenzpaar (Handapparat/Feststation) liegt um die Zwischenfrequenz von 455 kHz auseinander (beispielsweise 800 kHz/1255 kHz). Der Kanalabstand beträgt 20 - 50 kHz.

Die vom Oszillator 36 gelieferten Signale werden über eine Pulsbreiten-Steuerungs-Stufe 41 und eine Senderendstufe 42 (Verstärkerstufe mit Abschaltmöglichkeit) dem aus mindestens einer Lumineszenzdiode bestehenden IR-Emitter 13 zugeführt.

Als Maßnahme zur Reduzierung des Stromverbrauches findet eine Gleichrichter-Sprachsteurungs-Stufe 39 Verwendung. Aufgabe dieser Stufe ist es, den Sender (Emitter) in den Sprechpausen abzuschalten. Hierzu wird das Modulationssignal gleichgerichtet und einer Entscheidungsstufe (Komparator) zugeführt. Ein Überschreiten der Schwelle schaltet den Sender ein. Nach Unterschreiten der Schwelle schaltet der Sender nach ca. 0,5 s wieder ab.

Die eingesetzte Pulsbreitensteuerungsstufe 41 dient zur Änderung der Senderausgangsleistung. Grundgedanke ist es hierbei, aus der momentanen Feldstärke am Handapparat (Feldstärke-Ausgang) die Sendeleistung auf einen minimalen, notwendigen Wert zu reduzieren. Wenn sich der Benutzer beispielsweise in der Nähe der festen Gegenstation befindet ist sicherlich nur eine geringere Senderleistung nötig, um die Übertragung zu gewährleisten. Zur Reduzierung der Sendeleistung wird vorzugsweise eine Änderung des Pulspausenverhältnisses vorgenommen.

Die auf die mindestens eine Fotodiode des IR-Empfängers 17 der Gegenstation 2 treffende leistungsmodulierte Strahlung erzeugt dort einen elektrischen Signalstrom mit der gleichen Frequenz, mit der der optische Emitter des Handapparates gepulst wird.

Es wird nunmehr davon ausgegangen, daß eine leistungsmodulierte IR-Strahlung von der Gegenstation auf den Handapparat übertragen und dort über die mindestens eine Fotodiode des IR-Empfängers 12 empfangen wird. Das vom IR-Empfänger 12 gelieferte Signal wird, gegebenenfalls über ein Bandfilter, einem FM-Empfänger 30 mit Mischstufe und Demodulator zugeführt. Das Signal wird dabei in der Mischstufe mit der lokalen (mit der Sendefunktion des Handapparates modulierten) Frequenz des zugehörigen Frequenzoszillators 36 gemischt. Die Mischstufe kann beispielsweise als multiplizierendes Element ausgebildet sein.

Die sich in der Mischstufe ergebene Summenfrequenz aus der lokalen Oszillatorfrequenz (mit der Sendefunktion des Handapparates modulierten Frequenz) und der empfangenen Frequenz, die der IR-Empfänger 12 liefert, wird, ggf. über ein Filter und einen Frequenzverdoppler, einer Subtraktionsstufe 31 zugeführt. Durch Subtraktion der Sendefunktion vom Signal des Demodulators 30 wird hier die Empfangsfunktion erhalten.

Handapparat und stationäre Gegenstation besitzen daher jeweils nur einen einzigen Frequenzoszillator. Beide Vorrichtungen unterscheiden sich in der Frequenz des jeweiligen Frequenzoszillators. Dabei sind die Frequenzen stets so gewählt, daß die Summe der Frequenzen einen konstanten wohldefinierten Wert aufweist. Es können beliebig viele Frequenzpaare gefunden werden, die diese Bedingung erfüllen.

Wenn solcher Maßen bestimmte Frequenzpaare in den Frequenzoszillatoren eingestellt sind, ist es in einfacher Weise möglich, mit dem Signal des jeweiligen Frequenzoszillators sowohl den zugehörigen Emitter zu steuern als auch das Signal der Gegenstation in der Mischstufe zu genau der Summenfrequenz zu mischen.

Wie bereits erwähnt, muß die Modulationsspannung am Ausgang des Compressors 38, mit der der PLL-Oszillator 36 moduliert wird, wieder aus dem im FM-Empfänger 30 demodulierten Signal entfernt werden. Dies geschieht durch geeignete Überlagerung des demodulierten Signales aus dem Empfänger 30 mit dem um die Laufzeit des Empfängers verzögerten Modulationssignal in der erwähnten Subtraktionsstufe 31. Die Modulationsspannung am Ausgang des Compressors 36 wird über eine geeignete Verzögerungsstrecke 37 um 60 µs verzögert.

Die in der Subtraktionsstufe 31 erhaltene Empfangsfunktion wird über einen Expander 32 und ein Bandpaß 33 sowie einen Verstärker 34 dem Lautsprecher 4 zugeführt. Der Expander 32 ist eine Umkehrung des Compressors 38. Der komprimierte Dynamikumfang wird wieder auf den Originalumfang expandiert.

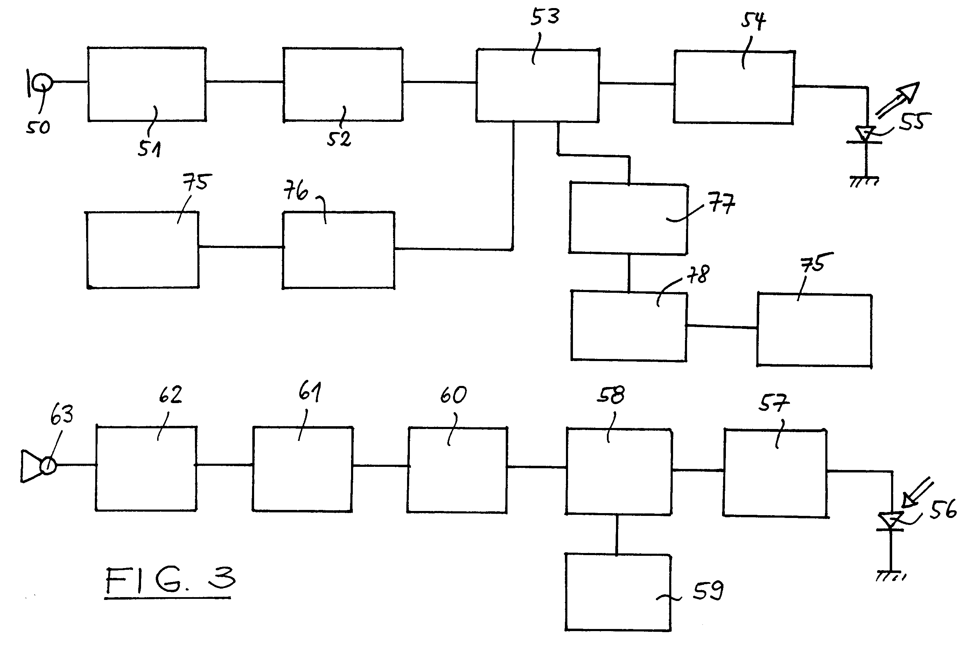

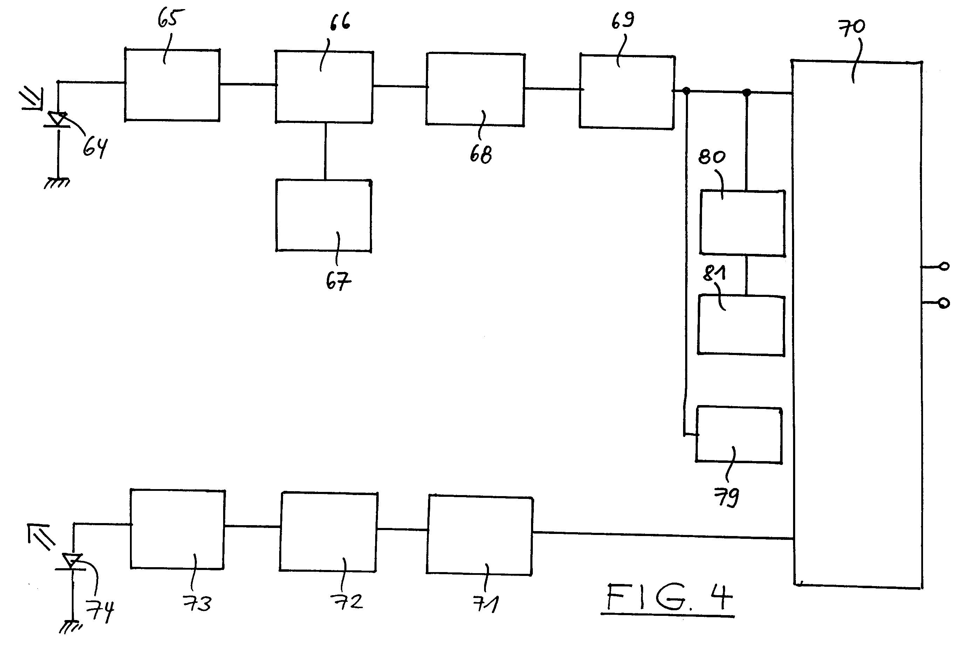

Figur 3 zeigt ein Grobschaltbild des Handapparates 1 des IR-Telefons der Figur 1 gemäß einer zweiten Variante der vorliegenden Erfindung. Figur 4 zeigt ein Grobschaltbild des zugehörigen Basisgerätes 2 gemäß der zweiten Variante der Erfindung.

Im einzelnen besitzt der Handapparat ein Mikrofon 50, über das Sprechsignale in elektrische Signale umgewandelt werden. Dem Mikrofon 50 ist ein Vorverstärker 51 nachgeschaltet. Die verstärkten elektrischen Signale werden einem Modulator 52 zugeführt, der zum Modulieren der Trägerfrequenz eines Frequenzoszillators 53 dient, dessen Trägerfrequenz über einen PLL-Regelkreis stabilisiert wird. Die mit der Sendefunktion modulierte Trägerfrequenz des Frequenzoszillators 53 wird einer Sendeendstufe 54 zugeführt und von dieser auf einen IR-Emitter 55 gegeben, der wie bei der ersten Ausführungsform aus mindestens einer Lumineszenzdiode bestehen kann. Vom IR-Emitter 55 werden die entsprechenden Signale als Infrarotstrahlung abgegeben.

Die von der in Figur 4 gezeigten Gegenstation (Basisgerät) abgegebene Infrarotstrahlung wird vom IR-Empfänger 56 empfangen und in elektrische Signale umgewandelt. Diese Signale werden über einen Vorverstärker 57 einem Mischer 58 Zugeführt und dort mit der Trägerfrequenz eines über einen PLL-Regelkreis stabilisierten Frequenzoszillators 59 vermischt. Die entstehende, im ZF-Band liegende Mischfrequenz wird dann über einen ZF-Verstärker 60 geführt und durch einen Demodulator 61 demoduliert. Die sich hieraus ergebende Empfangsfunktion wird einer NF-Endstufe 62 und von dort einem Lautsprecher 63 zugeführt.

Die Trägerfrequenz des Oszillators 53 auf der Sendeseite ist so bemessen, daß sich der eigene Sender nicht störend auf den Empfang auswirkt. Mit anderen Worten, wenn auf der Empfangsseite eine Empfangsfunktion vorliegt, mischt sich diese Empfangsfunktion mit der Trägerfrequenz des Oszillators 59 auf der Empfangsseite oder mit der Frequenz des Oszillators 53 auf der Sendeseite immer auf die ZF-Frequenz, so daß keine störenden Mischprodukte auftreten. Liegt hingegen keine Empfangsfunktion vor, wird keine entsprechende ZF-Frequenz erhalten. Beispielsweise wird mit einer ZF-Frequenz von 0,455 MHz und einer Trägerfrequenz des Empfangsoszillators 59 von 0,545 MHz gearbeitet. Die Frequenz des Sendeoszillators beträgt hierbei 1,455 MHz. Die Empfangsfrequenz beträgt 1 MHz.

Figur 4 zeigt den schematischen Aufbau des entsprechenden Basisgerätes. Der Aufbau ist analog zum Handapparat und umfaßt einen IR-Empfänger 64, dem ein Vorverstärker 65 nachgeschaltet ist. Wie beim Handapparat handelt es sich hierbei um einen selektiven Vorverstärker. Über einen Mischer 66 mit zugehörigem PLL-stabilisierten Oszillator 67 werden die Signale in das ZF-Band gebracht und über einen ZF-Verstärker 68 einem Demodulator 69 zugeführt, wo sie demoduliert werden. Die Signale werden dann einer üblichen Telefonschaltung 70 mit Anschluß an das Postnetz zugeführt. Umgekehrt werden über das Postnetz und die Telefonschaltung 70 eingegebene Signale zur Modulation der Trägerfrequenz eines PLL-stabilisierten Oszillators 72 verwendet (Modulator 71). Die frequenzmodulierten Signale werden dann einer Sendeendstufe 73 zugeführt und von dort einem IR-Emitter 74 zugeleitet.

Bei der hier dargestellten Ausführungsform werden nicht nur Tonsignale, sondern auch Wähl/Steuersignale über die Infrarotstrecke übertragen. Der Handapparat besitzt eine geeignete Wähltastatur 75, über die Wählsignale, aber auch Steuersignale, beispielsweise Laut-Leise-Stellung, an das Basisgerät abgegeben werden können. Diese Wähl/Steuersignale werden entweder über einen DTMF-Generator 76, der jeder Taste der Tastatur-Matrix eine bestimmte Tonkombination zuordnet, oder über einen Prozessor 78 und ein FSK-Modem 77 verarbeitet und als Sendefunktion mit auf den PLL-Oszillator 53 der Sendeseite des Handapparates gegeben. Nach Demodulation im Basisgerät werden die entsprechenden Signale wiederum über einen DTMF-Receiver 79 oder ein FSK-Modem 80 sowie einen Prozessor 81 an die Telefonschaltung 70 weitergegeben oder, wenn es sich um Steuersignale für das Basisgerät handelt, dort ihrer entsprechenden Verwendung zugeführt, beispielsweise zur Lautstärkeregulierung des Lautsprechers des Basisgerätes beim Freisprechen.

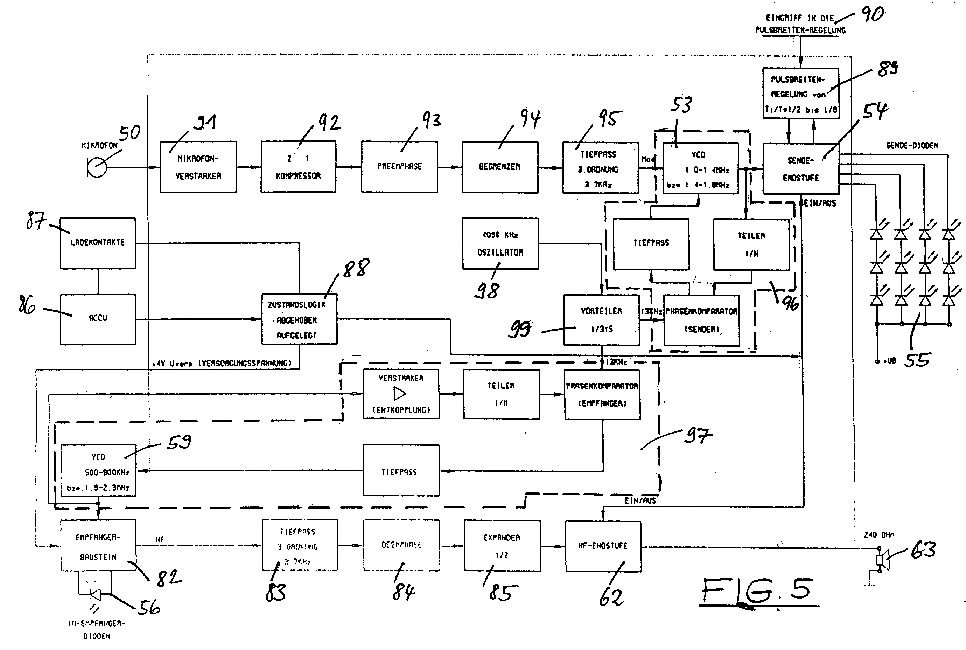

Figur 5 zeigt ein detaillierteres Blockschaltbild des Handapparates der Figur 3. Auf der Sendeseite werden die von einem Mikrofon 50 kommenden elektrischen Signale über einen Mikrofonverstärker 91, einen 2:1 Kompressor 92, ein Preemphase-Glied 93, einen Begrenzer 94, und einen Tiefpass dritter Ordnung 95 einem spannungsgeregelten Oszillator 53 mit PLL-Regelkreis 96 zugeführt. Die frequenzmodulierten Signale werden über eine Sendeendstufe 54 einem aus zwölf Sendedioden bestehenden IR-Emitter 55 zugeleitet.

Auf der Empfangsseite weist der Handapparat einen IR-Empfänger 56 (Dioden) auf, der mit einem Empfängerbaustein 82 gekoppelt ist. Der Empfängerbaustein umfaßt einen Vorverstärker, Mischer, ZF-Verstärker und Demodulator. Der Mischer wird durch einen spannungsgeregelten Frequenzoszillator 59 gespeist, dem ein PLL-Regelkreis 97 zugeordnet ist, welcher einen Verstärker (Entkopplung), Teiler 1/M, Phasenkomparator und Tiefpass umfaßt. Entsprechend besitzt der PLL-Regelkreis 96 auf der Sendeseite einen Teiler 1/N, Phasenkomparator und Tiefpass. Beiden Phasenkomparatoren ist ein Vorteiler 99 als gemeinsamer Referenz zugeordnet, an den ein Oszillator 98 angeschlossen ist.

Sämtliche Bausteine des Handapparates außer der NF-Endstufe (Empfang) und der Sendeendstufe sind permanent in Betrieb, um hierdurch Einschwingphasen zu sparen. Beide Endstufen werden über eine Zustandslogik 88 in Abhängigkeit vom abgehobenen und aufgelegten Zustand des Handapparates ein- und ausgeschaltet. Über eine aufladbare Batterie 86 und entsprechende Ladekontakte 87 wird den Endstufen die entsprechende Versorgungsspannung, beispielsweise 4 V, zugeführt.

Die vom Empfängerbaustein 82 empfangenen und demodulierten Signale werden im NF-Band über einen Tiefpass dritter Ordnung 83, einen Deemphase-Baustein 84, einen Expander 1/2 85 und die NF-Endstufe 62 dem Lautsprecher 63 zugeführt.

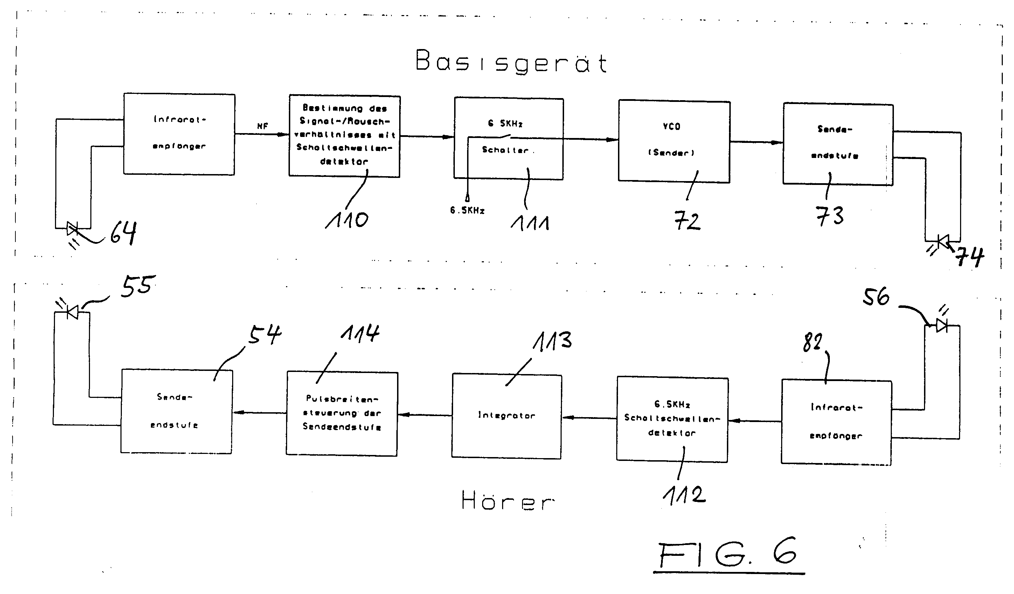

Figur 6 zeigt schematisch ein Blockdiagramm zur Durchführung der erwähnten Pulsbreitenregelung in Abhängigkeit vom Signal/Rauschverhältnis. Wie vorstehend erwähnt, empfängt das Basisgerät über den IR-Empfänger 64 die ausgesendeten Signale und wandelt diese in elektrische Signale um. Mit einem Schaltschwellendetektor 110 wird das Signal/Rauschverhältnis bestimmt. Wenn das Signal/Rauschverhältnis über einem Schwellenwert liegt, wird über eine Stufe 111 ein Zusatzsignal mit einer Frequenz von 6,5 kHz eingegeben. Dieses Zusatzsignal wird mit über die Bausteine 72 und 73 geführt und über den IR-Sender 74 des Basisgerätes mit abgegeben. Die Signale werden über den IR-Empfänger 56 des Hörers (Handapparates) und den Empfänger 82 empfangen. Ein weiterer Schaltschwellendetektor 112 detektiert die Anwesenheit des Zusatzsignales (6,5 kHz). Liegt das Zusatzsignal vor, wird über einen Integrator 113 eine Signalglättung und mit der Pulsbreitensteuerungsstufe 114 eine Pulsbreitensteuerung der Sendeendstufe 54 durchgeführt, und zwar wird die Pulsbreite in Richtung auf schmälere Impulse verändert, so daß die Sendeleistung auf beispielsweise 30 % heruntergesteuert wird. Hiermit kann somit eine Sendeleistungsregelung in Abhängigkeit von der Entfernung durchgeführt werden. In Figur 5 ist die vorstehend beschriebene Pulsbreitenregelung bzw. -steuerung insgesamt mit 90 bezeichnet.

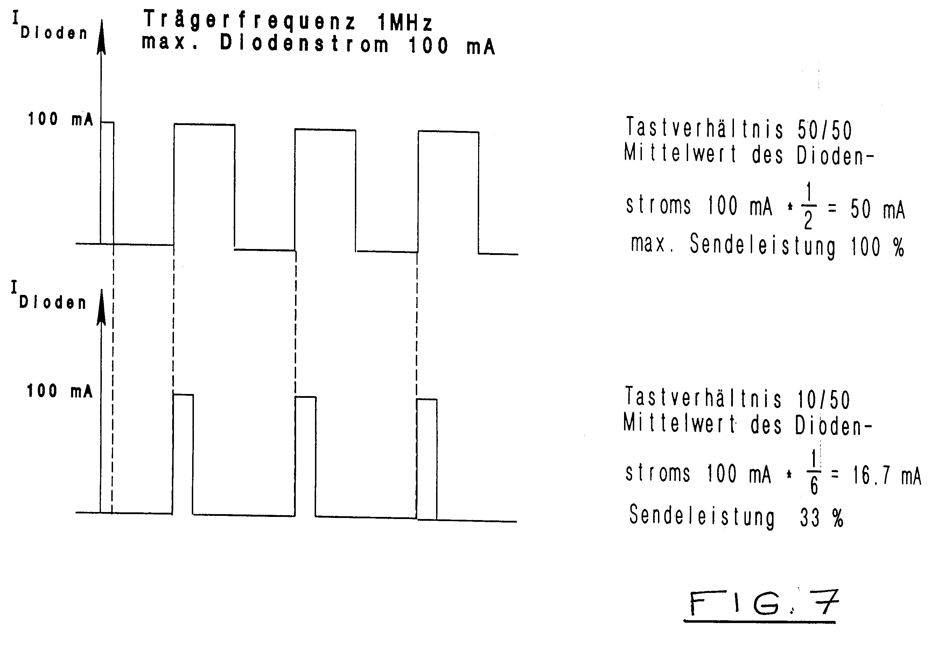

Gemäß einer weiteren Pulsbreitenregelung, die in Figur 5 insgesamt mit 89 bezeichnet ist, wird der Mittelwert des Diodenstromes gemessen, mit einem voreingestellten Mittelwert verglichen und durch Variation des Puls/Pausenverhältnisses auf den vorgegebenen Mittelwert geführt. Hierdurch läßt sich der Stromverbrauch beträchtlich reduzieren, und es wird ein entsprechender Diodenschutz und Endstufenschutz erreicht. Das Schema dieser Pulsbreitensteuerung ist in Figur 7 dargestellt.

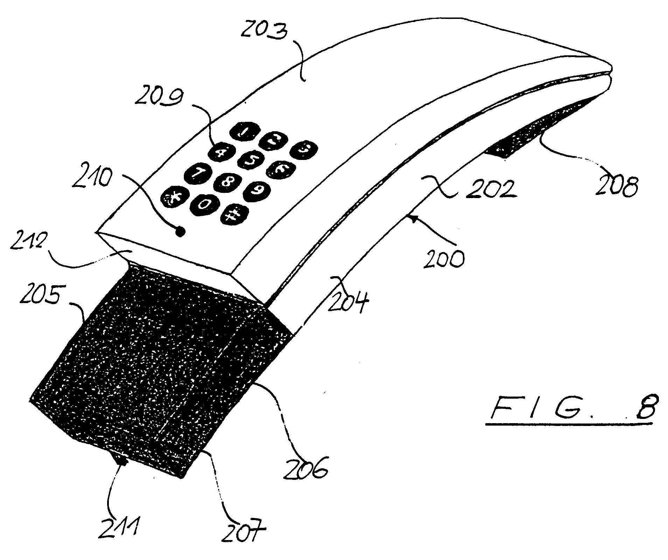

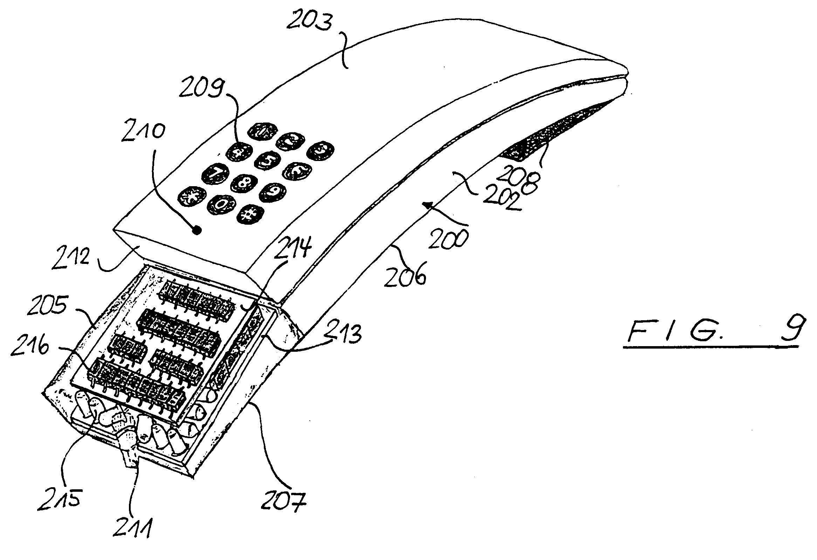

Der in den Figuren 8 und 9 dargestellte Handapparat 200 besitzt ein längliches, leicht gekrümmt ausgebildetes Gehäuse 202, das im Querschnitt etwa rechteckförmig ausgebildet ist. Das Gehäuse 202 weist ein Oberteil 203 und ein Unterteil 204 auf, die aufeinandergesetzt sind und beispielsweise über geeignete Schraubverbindungen und eine umlaufende Dichtung miteinander verbunden sind. Diese Schraubverbindungen sind nicht gezeigt.

Bei der hier dargestellten Ausführungsform ist das Gehäuseunterteil 204 länger ausgebildet als das Gehäuseoberteil 203. Es weist in seinem gegenüber dem Gehäuseoberteil vorstehenden Abschnitt ein sogenanntes Infrarotfenster 205 auf, das aus durchsichtigem bzw. durchscheindendem Material besteht. Dieses Infrarotfenster 205 umfaßt die Oberseite, Vorderseite und die beiden Seitenflächen des entsprechenden Gehäuseunterteilbereiches. Die Unterseite ist wie das übrige Gehäuse aus undurchsichtigem Material, beispielsweise einem geeigneten Kunststoff, ausgebildet.

Auf der Unterseite 206 des Gehäuseunterteils 204 befindet sich im dem Infrarotfenster 205 zugeordneten Endbereich ein Sprechbereich 207, in dem geeignete Sprechöffnungen (nicht gezeigt) in der entsprechenden Gehäusewand angeordnet sind. Diesen Sprechöffnungen ist ein übliches Mikrophon zugeordnet. Am gegenüberliegenden Endbereich der Unterseite 206 befindet sich ein Hörbereich 208, der als vorstehender Abschnitt gegenüber der Unterseite ausgebildet ist. In diesem Hörbereich sind geeignete Höröffnungen (nicht gezeigt) vorgesehen, denen ein entsprechender Lautsprecher im Inneren des Gehäuses zugeordnet ist. Der vorstehende Hörbereich 208 ist auf seiner Unterseite eben ausgebildet, so daß eine Ablagefläche für den Handapparat gebildet wird, die mit der gegenüberliegenden Endkante am Infrarotfenster zusammenwirkt.

Wie erwähnt, endet das Gehäuseoberteil 203 vor dem Infrarotfenster 205 und fällt mit einer Stufe 212 zu diesem hin ab. Auf der Oberseite des Oberteiles 203 in der Nähe dieser Stufe befindet sich eine geeignete Tastatur 209, die Wähltasten und Sondertasten aufweist. Zwischen der Tastatur 209 und der Stufe 212 ist ein Freisprechbereich vorgesehen, der hier durch eine geeignete Mikrophonöffnung 210 dargestellt ist.

Alternativ kann die Tastatur auch auf der Unterseite des Handapparates vorgesehen sein.

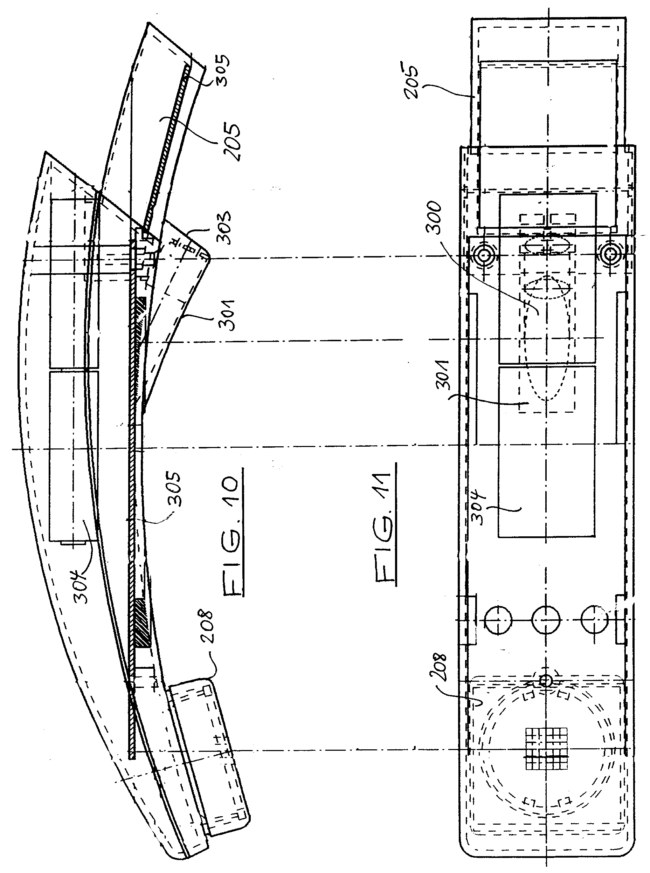

Figur 10 zeigt den genauen Aufbau des das Infrarotfenster 205 bildenden Gehäuseteiles. Im Infrarotfenster 205 sind zwei übereinander angeordnete Platinen 213, 214 untergebracht, auf denen sich entsprechende Empfängerdioden 216 und Sendedioden 215 befinden. Bei dieser Ausführungsform befinden sich auf der oberen Platine 214 nur Empfängerdioden 216, die galerieförmig angeordnet sind. Auf der unteren Platine 213 sind sowohl Empfängerdioden 216 als auch Sendedioden 215 angeordnet. Dabei ist die Anordnung so getroffen, daß zu den Seitenflächen hin sowohl Empfängerdioden als auch Sendedioden angeordnet sind, während zur Vorderseite hin nur Sendedioden angeordnet sind. Bei dieser Anordnung bildet daher die Oberseite des Infrarotfensters 205 eine Infrarotempfangsfläche, während die Vorderseite eine Infrarotsendefläche darstellt. Die beiden Seitenflächen sind sowohl Empfangs- als auch Sendeflächen.

Die erforderliche elektronische Baueinheit (nicht gezeigt) kann entweder ebenfalls in dem das Infrarotfenster bildenden Gehäuseteil oder im anderen Gehäuseteil untergebracht sein. Es versteht sich, daß diese Baueinheit sowohl die von den Empfangsdioden gelieferten elektrischen Signale verarbeitet und dem Lautsprecher zuführt als auch die von den beiden Mikrophonen gelieferten elektrischen Signale verarbeitet und den Sendedioden zuführt. Darüber hinaus verarbeitet die Baueinheit die über die Tastatur eingegebenen Signale und führt diese dem Sende/Empfangsteil zu.
An der dem Sprechbereich 207 benachbarten vorderen Unterkante des Gehäuses befindet sich ein Kontaktschalter 211, der beim Auflegen des Handappartes auf einen Tisch etc. eine Freisprecheinrichtung mit dem zweiten Mikrophon einschaltet.

Die Figuren 10 bis 12 zeigen eine weitere Ausführungsform eines Handapparates, die gegenüber der der Figuren 8 und 9 geringfügig abgeändert ist. In der nachfolgenden Beschreibung dieser Ausführungsform wird nur auf Merkmale eingegangen, die gegenüber der Ausführungsform der Figuren 8 und 9 unterschiedlich sind.

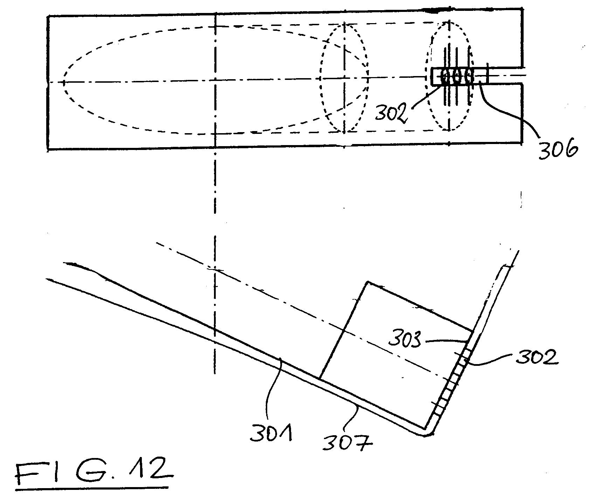

Wie man den Figuren 10 bis 12 entnehmen kann, besitzt der Handapparat einen von der Gehäuseunterseite vorstehenden nasenförmigen Gehäuseabschnitt 301, in dem das dem Sprachbereich zugeordnete Mikrofon 300 untergebracht ist. Dieser nasenförmige Gehäuseabschnitt ist in Figur 12 im einzelnen dargestellt. Er ist im Längsschnitt etwa dreieckförmig ausgebildet und besitzt eine Seite 307 mit geringerer Neigung sowie eine Seite 303, die stärker geneigt ist und in Richtung auf das Infrarotfenster 205 des Handapparates weist. In dieser stärker geneigten Seite sind Sprechöffnungen 302 für das im nasenförmigen Gehäuseabschnitt untergebrachte Mikrofon (bei 300 als Mikrofonkapsel schematisch dargestellt) vorgesehen. Die drei Sprechöffnungen 302 sind in einer mittig auf der Seite 303 angeordneten Vertiefung bzw. Nut 306 vorgesehen. Wie man Figur 11 entnehmen kann, ist der nasenförmige Gehäuseabschnitt 301 etwa mittig auf der Unterseite des Gehäuses angeordnet, und zwar im an das Infrarotfenster 205 angrenzenden Bereich der Unterseite.

Desweiteren unterscheidet sich die Ausführungsform der Figuren 10 bis 12 von der der Figuren 8 und 9 durch die Ausbildung des Höreransatzes 208. Bei der vorliegenden Ausführungsform steht der Höreransatz relativ weit von der Unterseite des Gehäuses vor und besitzt eine etwa parallel zur Unterseite verlaufende Abschlußfläche. Der Höreransatz ist in der Draufsicht etwa viereckig ausgebildet und zur Aufnahme einer runden Hörkapsel geeignet.

Die Ausführungsform des Handapparates der Figuren 10 bis 12 besitzt eine im Gehäuse angeordnete Platine 305 sowie eine im Infrarotfenster angeordnete Platine 305, über der eine weitere Platine angeordnet sein kann. Im oberen Bereich des Gehäuses sind geeignete Sekundärbatterien 304 angeordnet. Der Gehäusedeckel ist mit der Unterseite des Gehäuses an drei Stellen verschraubt (schematisch in den Figuren 10 und 11 angedeutet).

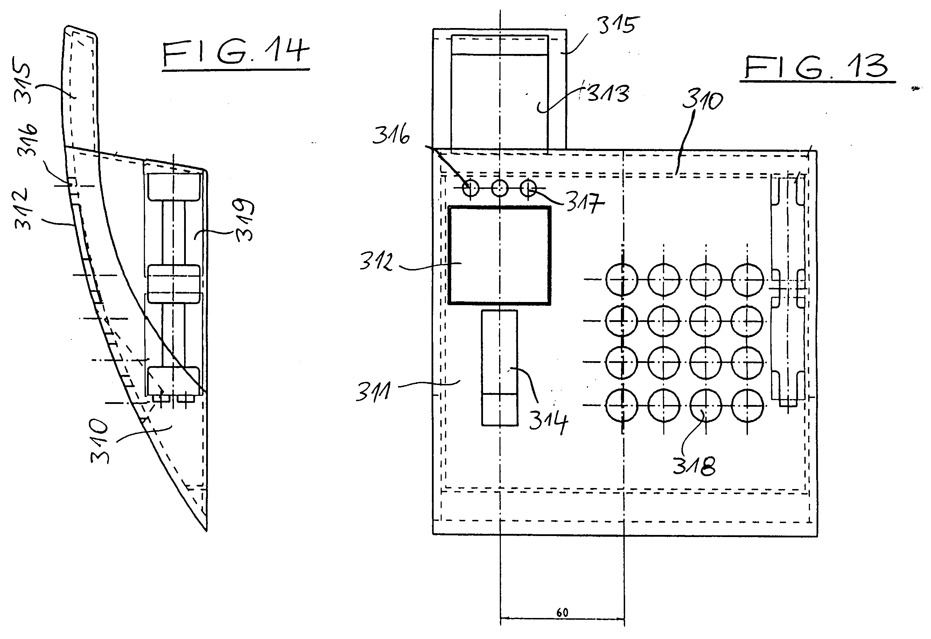

Die Figuren 13 und 14 zeigen eine Ausführungsform eines Basisgerätes, das ein geeignetes Gehäuse mit ebener Bodenfläche sowie ebenen Seitenflächen und einer gekrümmten Oberseite aufweist. Auf der Oberseite befinden sich eine geeignete Tastatur 318 sowie ein Auflagebereich 311 für den Handapparat. Im Aufnahmebereich sind ein Infrarotfenster 312, eine Vertiefung 314 zur Aufnahme des nasenförmigen Gehäuseabschnittes 301 des Handapparates und drei Kontakte 316, 317 angeordnet, von denen zwei als Ladekontakte 316 und einer als Erkennungskontakt 317 ausgebildet sind. Die Funktionsweise dieser Kontakte wurde bereits eingangs beschrieben. In Verlängerung des Aufnahmebereiches 311 erstreckt sich seitlich vom Gehäuse eine Fassung 315 mit offener Mitte 313 zur Aufnahme des Höreransatzes 208 des Handapparates. Im aufgelegten Zustand kommt daher der Höreransatz 208 in die offene Mitte 313 der Fassung 315 zu liegen, während der nasenförmige Gehäuseabschnitt 301 des Handapparates in die Vertiefung 314 eingreift. Auf diese Weise ist der Handapparat auf dem Basisgerät fixiert. Im aufgelegten Zustand wird das Infrarotfenster 312 abgedeckt und im abgehobenen Zustand freigegeben. Mit 319 ist ein geeignetes Unterteil für das Gehäuse 310 bezeichnet.

## Patentansprüche

1. Infrarot-Telefon mit einer ersten Station, insbesondere einem Handapparat, mit Mikrofon, Lautsprecher, einem IR-Emitter, einem IR-Empfänger und einer zweiten Station, inbesondere einer fest installierten Gegenstation, mit IR-Emitter, IR-Empfänger, Fernsprechnetzanschluß, dadurch gekennzeichnet, daß die erste Station (1) und die zweite Station (2) je einen einzigen Frequenzoszillator (36) aufweisen, dessen durch die zu übertragenden elektrischen Signale modulierte Frequenz sowohl die Leistung des zugehörigen IR-Emitters (13, 18) steuert als auch einer zugehörigen IR-Mischstufe zugeführt wird, die Frequenzoszillatoren (36) der ersten und zweiten Station (1, 2) unterschiedliche Mittenfrequenzen besitzen, das vom zugehörigen IR-Empfänger (12, 17) gelieferte Signal mit der modulierten Frequenz des zugehörigen Frequenzoszillators (36) in der Mischstufe gemischt wird und die durch die Mischung entstehende Summenfrequenz bzw. Differenzfrequenz aus der empfangenen Frequenz und der modulierten Oszillatorfrequenz über einen Frequenzdemodulator (30) demoduliert und aus dem resultierenden Signal die Empfangsfunktion gewonnen wird.

2. Infrarot-Telefon nach Anspruch 1, dadurch gekennzeichnet, daß die Mittenfrequenzen der Frequenzoszillatoren (36) veränderlich sind, wobei gewisse wohldefinierte Frequenzen (Kanäle) wählbar sind.

3. Infrarot-Telefon nach Anspruch 2, dadurch gekennzeichnet, daß die Frequenzoszillatoren (36) beider Vorrichtungen eine Vielzahl von einander zugeordneten Mittenfrequenzpaaren besitzen, deren Frequenzsumme jeweils den gleichen konstanten wohldefinierten Wert besitzt.

4. Infrarot-Telefon nach Anspruch 3, dadurch gekennzeichnet, daß durch Zuordnung von Kanalnummern zu den einstellbaren Mittenfrequenzen beider Frequenzoszillatoren (36) zwei Gruppen von Stationen definiert sind, der Gestalt, daß eine Station der ersten Gruppe genau dann mit einer Station der zweiten Gruppe kommuniziert, wenn an beiden Stationen die gleiche Kanalnummer eingestellt ist, mithin jedem Kanal eine erste Frequenz und eine zweite Frequenz zugeordnet ist.

5. Infrarot-Telefon nach Anspruch 4, dadurch gekennzeichnet, daß die Zuordnung der Mittenfrequenzen zu den zugehörigen Kanalnummern so gewählt ist, daß die Summe der Frequenzen aus der ersten Gruppe und der zweiten Gruppe, die einem beliebigen Kanal zugeordnet sind, stets den konstanten und wohldefinierten Summenbetrag ergibt.

6. Infrarot-Telefon nach einem der vorangehenden Ansprüche, dadurch gekennzeichnet, daß die Mittenfrequenz der Frequenzoszillatoren (36) durch einen PLL (Phase-Locked-Loop)-Regelkreis stabilisiert ist.

7. Infrarot-Telefon nach einem der vorangehenden Ansprüche, dadurch gekennzeichnet, daß die vom IR-Empfänger (12, 17) gelieferten elektrischen Signale durch Frequenzumsetzung und anschließende Frequenzvervielfachung in einen zur weiteren Verarbeitung günstigen Frequenzbereich gebracht werden.

8. Infrarot-Telefon nach einem der vorangehenden Ansprüche, dadurch gekennzeichnet, daß das durch die Mischung entstehende Summensignal in seiner Bandbreite durch ein Bandfilter begrenzt und dem Frequenzdemodulator (30) zugeführt wird und daß vom Signal des Frequenzdemodulators (30) in einer nachfolgenden Subtrahierstufe (31) das den Frequenzoszillator (36) dieser Station modulierende Signal abgezogen wird.

9. Infrarot-Telefon mit einer ersten Station, insbesondere einem Handapparat, mit Mikrofon, Lautsprecher, einem IR-Emitter, einem IR-Empfänger und einer zweiten Station, insbesondere einer fest installierten Gegenstation, mit IR-Emitter, IR-Empfänger, Fernsprechnetzanschluß, dadurch gekennzeichnet, daß die erste und zweite Station jeweils einen ersten Frequenzoszillator (53, 72) aufweisen, dessen durch die zu übertragenden elektrischen Signale modulierte Frequenz die Leistung des zugehörigen IR-Emitters (55, 74) steuert, und einen zweiten Frequenzoszillator (59, 67) mit Mischer (58, 66) zur Umsetzung der über den IR-Empfänger (56, 64) empfangenen elektrischen Signale ins Zwischenfrequenzband.

10. Infrarot-Telefon nach Anspruch 9, dadurch gekennzeichnet, daß die Frequenzen des Sendeoszillators (53, 72) und des Empfängeroszillators (59, 67) derselben Station so abgestimmt sind, daß bei Vorliegen einer Empfangsfunktion die Frequenz des Sendeoszillators (53, 72) im Mischer (58, 66) des Empfängers genau zur Zwischenfrequenz gemischt wird.

11. Infrarot-Telefon nach Anspruch 9 oder 10, dadurch gekennzeichnet, daß die Trägerfrequenzen der Frequenzoszillatoren (53, 72; 59, 67) PLL(Phase-Locked-Loop)-stabilisiert sind.

12. Infrarot-Telefon nach einem der Ansprüche 9 bis 11, dadurch gekennzeichnet, daß die Zwischenfrequenz 0,455 MHz beträgt.

13. Infrarot-Telefon nach einem der Ansprüche 9 bis 12, dadurch gekennzeichnet, daß dem Mischer (58, 66) ein ZF-Verstärker (60, 68) nachgeschaltet ist.

14. Infrarot-Telefon nach einem der vorangehenden Ansprüche, dadurch gekennzeichnet, daß als IR-Emitter (13, 18; 55, 74) Lumineszenzdioden verwendet werden, wobei die Wellenlänge der ausgesandten Strahlung im Bereich von 380 nm bis 1.000 nm liegt.

15. Infrarot-Telefon nach Anspruch 9, dadurch gekennzeichnet, daß jede Lumineszenzdiode so durch den zugehörigen Frequenzoszillator (36; 53, 72) gesteuert wird, daß der Wechselanteil der von der Lumineszenzdiode abgestrahlten IR-Intensität einen sinus- bzw. sinus-halbwellenförmigen Verlauf hat.

16. Infrarot-Telefon nach einem der vorangehenden Ansprüche, dadurch gekennzeichnet, daß als IR-Empfänger (12, 17; 56, 64) ein oder mehrere Foto-Sperrschichtempfänger (Fotodioden) mit einer spektralen Empfindlichkeit im Bereich 380 nm bis 1.000 nm verwendet werden.

17. Infrarot-Telefon nach einem der vorangehenden Ansprüche, dadurch gekennzeichnet, daß sie zur Verbesserung des Signal-Rausch-Abstandes ein Compandersystem (Compressor/Expander) (38, 32) aufweist.

18. Infrarot-Telefon nach einem der vorangehenden Ansprüche, dadurch gekennzeichnet, daß dem Mikrofon (5) das Handapparates ein Mikrofonverstärker (44) mit Begrenzer, ein Bandpaß (43) und ein Compressor (38) nachgeschaltet sind.

19. Infrarot-Telefon nach einem der vorangehenden Ansprüche, dadurch gekennzeichnet, daß die Modulationsspannung am Ausgang des Compressors (38) um 60 µs verzögert wird.

20. Infrarot-Telefon nach einem der vorangehenden Ansprüche, dadurch gekennzeichnet, daß dem Frequenzdemodulator (30) ein Expander (32) und ein Bandpaß (33) nachgeschaltet sind.

21. Infrarot-Telefon nach einem der vorangehenden Ansprüche, dadurch gekennzeichnet, daß es eine dem IR-Emitter (13, 18) in den Sprechpausen abschaltende Gleichrichter-Sprachsteuerungsstufe (39) aufweist.

22. Infrarot-Telefon nach einem der vorangehenden Ansprüche, dadurch gekennzeichnet, daß es eine Pulsbreitensteuerungsstufe (41) zur Änderung der Senderausgangsleistung aufweist.

23. Infrarot-Telefon nach einem der vorangehenden Ansprüche, dadurch gekennzeichnet, daß ein FM-Empfänger-Baustein (30) mit Mischstufe und Demodulator verwendet wird, der einen Feldstärkeausgang und eine eingebaute Rauschsperre (35) besitzt, die bei unzureichender Feldstärke der Gegenstation das Tonsignal stumm schaltet.

24. Infrarot-Telefon nach einem der vorangehenden Ansprüche, dadurch gekennzeichnet, daß der Handapparat (1) mit einer Batterie (9, 86), Batterie-Ladekontakten (11,87) und einem AUS/EIN-Schalter (10, 88) versehen ist.

25. Infrarot-Telefon nach Anspruch 17, dadurch gekennzeichnet, daß die Pulsbreitensteuerungsstufe das Signal/Rauschverhältnis auf der Empfängerseite der ersten Station mit einem Schwellenwert vergleicht, bei Über/Unterschreiten des Schwellenwertes ein Zusatzsignal abgibt, das Zusatzsignal über den IR-Emitter und den IR-Empfänger auf die zweite Station überträgt, dort das Zusatzsignal detektiert und bei Vorhandensein/Nichtvorhandensein desselben die Pulsbreite der zugehörigen Sendeendstufe variiert.

26. Infrarot-Telefon nach Anspruch 17, dadurch gekennzeichnet, daß die Pulsbreitensteuerungsstufe den Mittelwert des Diodenstromes mißt, diesen Mittelwert mit einem voreingestellten Mittelwert vergleicht und bei Abweichen durch Variation des Puls/Pausenverhältnisses auf den voreingestellten Mittelwert führt.

27. Infrarot-Telefon nach einem der vorangehenden Ansprüche, dadurch gekennzeichnet, daß die von der ersten Station oder der zweiten Station zu übertragenden elektrischen Signale Signale des Mikrofons (50)/der Telefonaschaltung (70) und beliebigen Sonderfunktionen entsprechende Steuer/Wählsignale umfassen.

28. Infrarot-Telefon nach Anspruch 27, dadurch gekennzeichnet, daß die Steuer/Wählsignale von einer Tastatur (75) und/oder einem Schalter der ersten oder zweiten Station stammen.

29. Infrarot-Telefon nach Anspruch 27 oder 28, dadurch gekennzeichnet, daß die Steuer/Wählsignale auf der Sendeseite über einen Prozessor (78) mit FSK-Modem (77) oder einen DTMF-Generator (76) verarbeitet und dem zugehörigen Sendeoszillator (53) zugeführt und auf der Empfangsseite nach der Demodulationsstufe über einen Prozessor (81) mit FSK-Modem (80) oder einen DTMF-Receiver (79) wiedergewonnen werden.

30. Infrarot-Telefon nach einem der vorangehenden Ansprüche, dadurch gekennzeichnet, daß es zur Verbesserung des Signal-Rausch-Abstandes ein Pre- und Deemphase-System aufweist.

31. Handapparat für ein aus Basisgerät und Handapparat bestehendes Telephon, insbesondere nach einem der Ansprüche 1 bis 30, mit einem länglichen Gehäuse mit einem Sprechbereich an einem Endbereich und einem Hörbereich am gegenüberliegenden Endbereich der Gehäuseunterseite, einem dem Sprechbereich zugeordneten Mikrophon, einem dem Hörbereich zugeordneten Lautsprecher, einem Sendeteil, einem Empfangsteil und einer elektronischen Signalverarbeitungseinheit innerhalb des Gehäuses sowie wahlweise einer Tastatur an einer Bedienfläche des Gehäuses, dadurch gekennzeichnet, daß der dem Sprechbereich (207) zugeordnete Gehäuseoberteilbereich unter Bildung eines Infrarotfensters (205) aus durchsichtigem bzw. durchscheinendem Material ausgebildet ist und ein eine Vielzahl von Infrarotsende- und -empfangsdioden (215, 216) aufweisendes Infrarotsende- und -empfangsteil beherbergt, wobei die Oberseite, Vorderseite und Seitenflächen des Gehäuseoberteilbereiches jeweils Infrarotempfangs- und/oder -sendeflächen vorsehen.

32. Handapparat nach Anspruch 31, dadurch gekennzeichnet, daß der das Infrarotfenster (205) bildende Gehäuseoberteilbereich im Horizontalschnitt etwa rechteckförmig ausgebildet ist.

33. Handapparat nach Anspruch 31 oder 32, dadurch gekennzeichnet, daß zwischen dem das Infrarotfenster (205) bildenden Gehäuseoberteilbereich und dem restlichen Oberteilbereich eine sich vom Infrarotfenster (205) nach oben erstreckende Stufe (212) vorgesehen ist.

34. Handapparat nach einem der Ansprüche 31 - 33, dadurch gekennzeichnet, daß die Tastatur (209) auf der Oberseite des Gehäuseoberteiles angeordnet ist.

35. Handapparat nach einem der Ansprüche 31 - 34, dadurch gekennzeichnet, daß er ein zweites Mikrophon aufweist, das einem zweiten Sprechbereich (210) (Freisprechbereich) auf der Oberseite des Gehäuseoberteiles benachbart zum Infrarotfenster (205) zugeordnet ist.

36. Handapparat nach einem der Ansprüche 31 - 35, dadurch gekennzeichnet, daß er im Bereich der dem ersten Sprechbereich (207) benachbarten Endkante einen Kontaktschalter (211) zum Einschalten einer Freisprecheinrichtung aufweist.

37. Handapparat nach einem der Ansprüche 31 - 36, dadurch gekennzeichnet, daß das Gehäuse (202) eine in Längsrichtung konvex gekrümmte Form besitzt.

38. Handapparat nach einem der Ansprüche 31 - 37, dadurch gekennzeichnet, daß der Hörbereich (208) als von der Unterseite (206) des Gehäuses (202) vorstehender Ansatz ausgebildet ist, der insbesondere eine Ablagefläche vorsieht.

39. Handapparat nach einem der Ansprüche 31 - 38, dadurch gekennzeichnet, daß das dem Sprechbereich zugeordnete Mikrophon (300) in einem von der Gehäuseunterseite vorstehenden nasenförmigen Gehäuseabschnitt (301) angeordnet ist.

40. Handapparat nach Anspruch 39, dadurch gekennzeichnet, daß der nasenförmige Gehäuseabschnitt (301) im Längsschnitt etwa dreieckförmig ausgebildet ist, wobei eine kürzere und stärker geneigte, mit mindestens einer Sprechöffnung (302) versehene Seite (303) zum Infrarotfenster (205) hin weist.

41. Basisgerät für ein aus Basisgerät und Handapparat bestehendes Telephon, insbesondere nach einem der Ansprüche 1 bis 30, und einen Handapparat, insbesondere nach einem der Ansprüche 31 bis 40, dadurch gekennzeichnet, daß es auf der Oberseite seines Gehäuses (310) im Bereich der Auflagefläche (311) für den Handapparat ein Infrarotfenster (312) aus durchsichtigem bzw. durchscheinendem Material aufweist, unter dem ein Infrarotsende- und -empfangsteil angeordnet ist.

42. Basisgerät nach Anspruch 41, dadurch gekennzeichnet, daß seine Auflagefläche (311) für den Handapparat jeweils eine Vertiefung (313, 314) für den Höreransatz (208) und den nasenförmigen Gehäuseabschnitt (301) des Handapparates aufweist.

43. Basisgerät nach Anspruch 42, dadurch gekennzeichnet, daß die Vertiefung (313) für den Höreransatz (208) durch eine seitlich vom Gehäuse vorstehende mittig offene Fassung (315) gebildet ist.

44. Basisgerät nach einem der Ansprüche 41 bis 43, dadurch gekennzeichnet, daß seine Auflagefläche (311) für den Handapparat drei Kontakte aufweist, von denen zwei als Ladekontakte (316) und einer als Erkennungskontakt (317) für den aufgelegten Zustand des Handapparates unabhängig vom Ladestrom ausgebildet sind.

45. Infrarot-Telefon nach einem der Ansprüche 1 bis 30, dadurch gekennzeichnet, daß es mindestens eine weitere erste Station, insbesondere Handapparat, nur mit IR-Empfänger, Lautsprecher und entsprechender Elektronik aufweist, die ausschließlich Empfangsfunktionen besitzt.
